# EUROPEAN PATENT SPECIFICATION

(11) **EP 0 570 163 B1**
(45) Date of publication and mention of the grant of the patent: **26.08.1998**
(21) Application number: 93303544.6
(22) Date of filing: 07.05.1993
(51) Int. Cl.: G01N 21/88, A24C 5/34

(54) **Apparatus and Method for optically inspecting cylindrical surfaces**
Gerät und Methode zur optischen Inspektion zylindrischer Oberfläche
Appareil et Méthode pour l'inspection optique de surfaces cylindriques

(30) Priority: 15.05.1992 US 884746; 27.05.1992 US 889457
(43) Date of publication of application: 18.11.1993
(73) Proprietor: Philip Morris Products Inc., Richmond Virginia 23234 (US)
(72) Inventor: Grollimund, Gary, Chesterfield, Virginia 23832 (US); Smith, Barry Scott, Hopewell, Virginia 23860 (US); Longest, Cary H., Jr., Midlothian, Virginia 23113 (US); Osmalov, Jerome S., Richmond, Virginia 23226 (US); Evani, Bhanu M., Richmond, Virginia 23235 (US)
(74) Representative: Marlow, Nicholas Simon

(56) References cited:
- DE-A- 3 628 088
- US-A- 3 527 234
- US-A- 4 639 592
- US-A- 5 013 905

## Description

### Background of the Invention

This invention relates to an apparatus and a method for optically inspecting cylindrical surfaces such as the cylindrical surfaces of cigarettes.

It is highly desirable to be able to inspect the entire cylindrical surface of cylindrical objects such as cigarettes. Any of a wide variety of defects may occur in such objects, and it is desirable to have automated equipment for detecting those defects so that defective objects can be rejected and/or so that any malfunctioning of the machinery producing those objects can be promptly identified and corrected. In the case of cigarettes, for example, the cylindrical surface may be defective due to a piece of tobacco stem piercing the paper, an imperfection in the way the filter has been joined to the remainder of the cigarette (including the possible complete absence of the intended filter), an imperfectly formed side seal which leaves some of the tobacco visible, a discoloration of the paper, etc.

Although inspection of this kind may take place at any stage in the production of the cigarettes, it can be advantageous to perform such inspection after processing of the individual cigarettes is complete or substantially complete. At this point in their fabrication, the individual cigarettes are most easily moved through the cigarette making machinery transverse to their length. This makes it difficult to use known cylindrical surface inspection apparatus such as that shown, for example, in Heitmann et al. U.S. patent 4,645,921, which requires the cigarettes to be passed longitudinally through the inspection apparatus.

On the other hand, with the cigarettes moving transverse to their length it is much more difficult to image the entire surface of the cigarette. For example, the cylindrical nature of the surface makes uniform illumination of the surface and elimination of shadows difficult. Thus, it may be necessary to inspect the surface piecemeal, but it is highly desirable to keep the number of inspections to a minimum in order to avoid undue proliferation of the inspection components.

Tobacco smoking articles, such as cigarettes and cigars, are made into rods on machines which take cut filler that is formed into a continuous rod of tobacco, and encircles the tobacco with a continuous ribbon of paper which is glued and heat-sealed. The continuous tobacco rod is formed and sealed in the making machine and then proceeds to another processing machine, such as a tipper. The tipper attaches a filter plug cut to the appropriate length between two tobacco rods. The tipper applies glue and wraps tipping paper around the filter segment and a portion of the tobacco rods. This creates a double cigarette length. The two cigarettes are then cut and oriented into a single row. A tipper as described is shown, for example, in U.S. Patent No. 3,527,234 to Hinzmann. It is the completed cigarette that is inspected for unsatisfactory conditions.

Optical scanning of cigarettes during production is taught by U.S. Patent No. 4,277,678 to Wahle et al. There, a cigarette is inspected in the tipping machine by two optoelectrical units mounted on a single rolling drum. The cigarette is stopped in its path and rotated using a separate rotary element while the optoelectrical units scan the cigarette's wrapper for unsatisfactory conditions. Each optoelectrical unit scans the entire cigarette for particular unsatisfactory conditions.

Other cigarette inspection systems test the cigarettes at several testing stations. Each station tests the cigarette for one or two different types of unsatisfactory conditions. U.S. Patent No. 4,403,620 to Joseph et al., U.S. Patent No. 4,484,591 to Wahle et al. and U.S. Patent No. 4,901,860 to Wahle et al. all teach separate testing stations for different unsatisfactory conditions in cigarettes.

Still other cigarette inspection systems use more than one drum to create more than one inspection zone. U.S. Patent No. 4,639,592 to Heitman passes cigarettes before optical inspection devices located at certain points along a predetermined path. The path requires at least two vacuum drums each to expose one side of the cigarette. Note that Heitman specifically prefers to not mechanically rotate the cigarette. Great British Patent No. 2,221,029 teaches a similar method.

Further, other devices inspect cigarettes before they are completed. For example, U.S. Patent No. 4,350,170 to Baier teaches inspection of the cigarette rod as it comes off the rod making machine by passing the rod through an annular housing. A similar device is taught by U.S. Patent No. 4,208,578 to McLoughlin et al.

None of the devices known currently in the field, inspect cigarettes in the simple, effective, compact system as disclosed herein. This invention provides a method and apparatus to inspect cigarettes at the speeds of modern production while inspecting nearly the entire cigarette.

It should also be noted that any successful inspection system for products such as cigarettes must be extremely fast in order to keep pace with the high speeds at which such products are typically made. For example, it is now common for a single cigarette making machine to make cigarettes at rates approaching 10,000 per minute. A successful cigarette inspection system must also be able to inspect for relatively small and/or subtle defects (e.g., a hole as small as about .5 millimeter in diameter or a minor discoloration of the cigarette paper).

In view of the foregoing, it has been desired to improve and simplify systems for inspecting cylindrical surfaces.

It has also been desired to provide cylindrical surface inspection systems which are capable of inspecting the entire circumference of such surfaces at very high speeds.

It has also been desired to provide an apparatus and method to visually inspect completed cigarettes.

It has also been desired to provide an apparatus and method to that will automatically reject assembled cigarettes that do not meet inspection standards.

It has also been desired to provide an apparatus and method to visually inspect nearly 360° of the circumference of the assembled cigarette.

It has also been desired to provide an apparatus and method to visually inspect nearly the entire surface of an assembled cigarette in a compact, efficient space employing a minimum of equipment.

According to the invention there is provided apparatus for optically inspecting substantially the entire cylindrical surface of an opaque, substantially cylindrical object, the surface portion having an axial length which is substantially greater than the circumference of the object and the surface portion extending circumferentially at least half way around the object, all of the said surface portion being inspected substantially instantaneously, the apparatus comprising:
a support for the object so that the surface portion is exposed for optical inspection; and an image former characterised in that the image former comprises means for directing illumination at the surface portion from two directions which are circumferentially spaced from one another by a first predetermined amount and which are selected so that the light from the said two directions collectively illuminates all of the said surface portion, whereby light is reflected from the said surface portions in two directions;
means for detecting light reflected from the said surface portion comprising a photosensitive image area comprising more than two photosensitive sections; and
means for guiding light reflected from the surface portion in one of the two directions to a first photosensitive section and for guiding light reflected in the other of the two directions to a second photosensitive section, the first and second sections of the photosensitive image area defining an image portion of the photosensitive image area.

Also according to the invention there is provided a method for optically inspecting substantially the entire cylindrical surface of a cylindrical object comprising:
supporting the object on a first support surface;
inspecting a first portion of the cylindrical surface of the object to generate a first image by illuminating the said first portion from two different directions and guiding the reflected light to two different photosensitive sections of a first photosensitive area;
rotating the object through 180°;
supporting the object on a second support surface;
inspecting a second portion of the cylindrical surface of the object, the first and second portions together including the entire cylindrical surface of the object, to generate a second image by illuminating the said second portion from two different directions and guiding the reflected light to two different photosensitive sections of a second photosensitive area;
analysing each image to determine whether or not they meet a predetermined criterion; and
rejecting the object of the predetermined criterion is not met.

Preferably, in cylindrical surface inspection apparatus according to the invention the object having the cylindrical surface is first supported (e.g., on the surface of a first rotating drum) so that one side of the object (preferably including at least half of the circumference of the cylinder) is exposed for optical inspection along a substantial length of the object. The exposed portion of the surface is illuminated by light from two linear light sources. These two light sources are aligned with the longitudinal axis of the cylindrical surface and are spaced apart by a relatively large distance circumferentially of the cylindrical surface so that collectively they preferably illuminate at least half of the circumference of the surface. Light reflected from the surface in two radially different directions is then used to form images of the surface. The two reflected light directions are preferably intermediate the directions from which the light arrives from the two light sources. However, the two reflected light directions are preferably sufficiently widely spaced circumferentially of the cylindrical surface so that collectively they provide image information regarding at least half the circumference of the surface. Optical components are preferably provided to direct the light reflected from the above-mentioned two directions to a single camera to reduce the number of cameras required.

After passing the point at which the first side of the object is imaged as described above, the support for the object is changed to expose the other side for optical inspection. For example, the object may be transferred from the surface of the above-mentioned first rotating drum to the surface of a second rotating drum. Again, preferably at least half the circumference of the cylinder is exposed. This newly exposed portion of the surface is illuminated and imaged in the same way that the first side is illuminated and imaged. A second camera (aided by optical components similar to those mentioned above in connection with the first camera) receives the reflected light from the two directions associated with the second side of the object.

Because the images of the cylindrical surface of the object typically do not fill the entire field of view of either of the above-mentioned cameras, only the portions of the camera screens containing cylindrical surface image information are scanned. The resulting saving in scanning time greatly speeds the operation of the system.

Each partial image of the cylindrical surface is analyzed to detect any defects in appearance. Although any of a wide variety of image analysis techniques can be used, in the preferred embodiments, each image is subdivided into a plurality of regions, each of which is aligned with the longitudinal axis of the cylindrical surface, and each of which is only a relatively small fraction of the dimension of the image transverse to that longitudinal axis. The image information in each of these regions is compared to expected information for that region (e.g., on an absolute or relative basis). Aligning the regions with the longitudinal axis of the cylindrical surface and confining each region to a small fraction of the circumference of the cylinder increases the sensitivity of the system to possible variations in the illumination level of the object in the circumferential direction.

On the basis of the foregoing analysis, any object having any unacceptable image is identified and preferably rejected so that it does not continue on for the further processing to which acceptable objects are subjected.

This system also preferably includes means for displaying the images of the objects, especially the images of defective objects, so the operator of the system can observe the nature of any defects. The system may also display information regarding such statistics as the number and/or percentage of defective objects encountered.

Preferably, apparatus according to the invention includes a machine vision system comprising at least two-dimensional video cameras to inspect cigarettes at two positions on a single rolling drum, preferably as part of the tipper. There is at least one rolling block that works in conjunction with the rolling drum to roll the cigarette.

In the preferred operation, the first rolling block attaches a filter plug to the tobacco rods, as part of the standard tipping operation of the tipper. Located after the first rolling block is a first two-dimensional video camera to inspect nearly the entire first half of the completed single- or double-length cigarette. A second rolling block is then provided to roll the cigarette approximately 180°. Located after the second rolling block is a second two-dimensional video camera to inspect nearly the entire second half of the cigarette.

In an alternative embodiment, a rolling drum can be provided after the tipper to provide the space needed for a first inspection, rolling the completed cigarette and then a second inspection. This drum could also be located just at the end of the tipper.

The vision system determines, from the information provided by the video cameras, whether the cigarette meets the preset characteristics for a completed cigarette. If the cigarette does not meet those characteristics, the cigarette is removed from the cigarette manufacturing system by a delivery/reject drum. The delivery/reject drum is located directly after the rolling drum and may be conventional.

The invention is able to provide a compact, efficient system for inspecting completed cigarettes at the high speeds of production encountered in today's modern manufacturing systems.

The invention will be further described, by way of example, with reference to the drawings, in which:
FIG. 1 is a simplified elevational view of illustrative cylindrical surface inspection apparatus constructed in accordance with the first aspect of the invention;
FIG. 2 is a more detailed view of a representative portion of the apparatus of FIG. 1;
FIG. 3 is a view taken along the line 3-3 in FIG. 2;
FIG. 4 is a simplified elevational view of a component which can be used in place of the component shown in FIG. 3;
FIG. 5 is a simplified view taken generally along the line 5-5 in FIG. 2;
FIG. 6 is a block diagram of illustrative control and analysis apparatus constructed in accordance with the principles of the first aspect of the invention;
FIGS. 7a and 7b are illustrative images formed on the video cameras in the apparatus of FIG. 1;
FIG. 8 shows a composite of the images of FIGS. 7a and 7b which is formed in the apparatus of FIG. 6;
FIG. 9 is a diagram which is useful in explaining how the apparatus of FIG. 6 may analyze images;
FIGS. 10a and 10b (collectively referred to as FIG. 10) are a flow chart of an illustrative image analysis process which can be carried out in the apparatus of FIG. 6;
FIG. 11 is a flow chart showing how two steps in FIG. 10 can be modified to analyze images somewhat differently ;
FIG. 12 is a flow chart showing another possible modification of the above-mentioned two steps in FIG. 10;
FIG. 13 is a simplified rendering of a typical display on the display component in the apparatus of FIG. 6;
FIG. 14 shows an alternative embodiment of a portion of FIG. 2;
FIG. 15 shows another alternative embodiment of a portion of FIG. 2;
FIG. 16 is a view of an embodiment of apparatus according to the second aspect of the invention isolated from the other parts of the tipper;
FIG. 17 is a detailed view of the first rolling block working of FIG 1 in conjunction with the rolling drum; and
FIG. 18 is a detailed view of the second rolling block of FIG. 1 working in conjunction with the rolling drum.

Although the principles of this invention are equally applicable to inspecting the cylindrical surfaces of other types of objects, the invention will be fully understood from the following explanation of its application to inspecting the cylindrical surfaces of finished or substantially finished cigarettes.

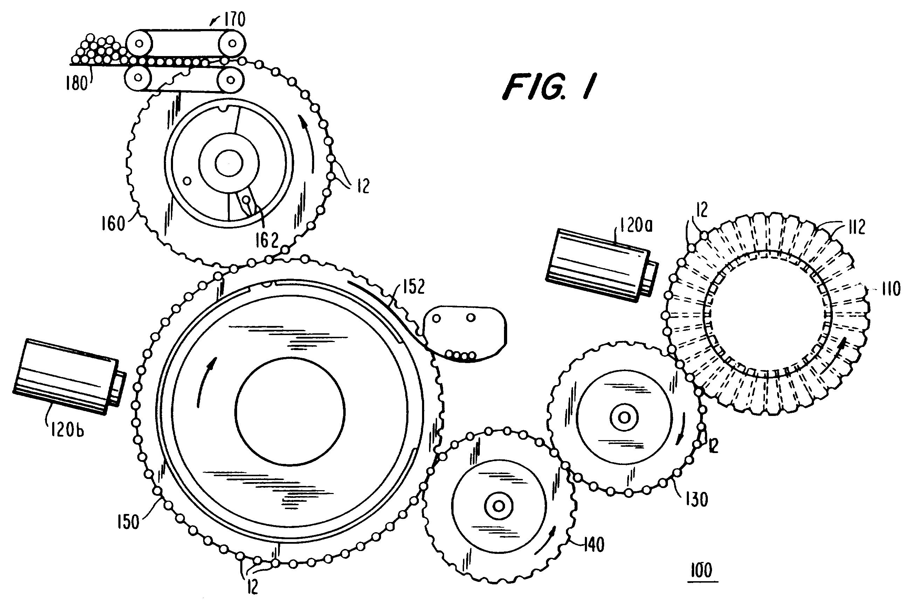

FIG. 1 shows the final portion 100 of a conventional Max S cigarette tipping machine which has been modified to include apparatus according to the first aspect of the present Max S machine is manufactured by Hauni-Werke Korber & Co. KG. of Hamburg, Germany. By the time cigarettes 12 reach the portion of the machinery shown in FIG. 1, the fabrication of the cigarettes is complete and it remains only to inspect them. Accordingly, as is conventional, the finished cigarettes are deposited one after another on conventional rotating inspection drum 110. Inspection drum 110 has a plurality of circumferentially spaced, axially extending flutes 112 on its outer surface. Each flute receives one cigarette 12, and the cigarette is held in the flute by reduced pressure ("vacuum") which is communicated to the bottom of the flute by passageways extending radially to the flute from a vacuum plenum in the interior of the drum. Such vacuum is typically applied only throughout the portion of the circumference of the drum to which the cigarettes are to be held as the drum rotates to convey the cigarettes. When a flute reaches the angular location at which the cigarette in that flute is to be transferred to another drum, the vacuum to that flute is cut off so that the next drum can pick up the cigarette with no resistance from the first drum. It will be noted that flutes 112 are shallow enough so that more than half the circumference of each cigarette is exposed.

While the cigarettes are on inspection drum 110 they are inspected in the conventional way by inspection apparatus (not shown) which is part of the Hauni machinery. For example, a typical conventional inspection test is a "dilution check" to make sure that the cigarette has the proper resistance to longitudinal air flow.

In addition, while the cigarettes are on drum 110, they also pass dual image camera box 120a which is part of the optical inspection system of this invention. As will be described in more detail below, camera box 120a illuminates more than 180° of the circumference of the cylindrical surface of each cigarette passing in front of it and forms two angularly spaced images of that surface. These two images collectively cover more than 180° of the circumference of the cylindrical surface of the cigarette. It should be noted that camera box 120a is preferably located adjacent an upper portion of the circumference of inspection drum 110, and that it is also preferably angled down toward the cigarette which is being illuminated and imaged. This helps keep any dust and debris from accumulating on the front of box 120a (i.e., the side directed toward the cigarettes). Such dust and debris could interfere with proper illumination and imaging of the cigarettes in accordance with this invention.

After passing camera box 120a, the cigarettes are transferred from inspection drum 110 to conventional reject drum 130. Drum 130 is a rotating, fluted, vacuum drum like drum 110. Any cigarette which the conventional Hauni inspection apparatus has found to be defective on drum 110 is blown off reject drum 130 and thereby rejected in the conventional way by conventional Hauni reject apparatus (not shown). Cigarettes found to be defective by the optical inspection apparatus of the first aspect of the invention are rejected at a later point as is explained below.

After passing approximately half way around reject drum 130, the cigarettes are transferred to conventional transfer drum 140. Transfer drum 140 is another rotating, fluted, vacuum drum like the previously described drums. Drum 140 conveys cigarettes 12 from reject drum 130 to elevator drum 150.

Elevator drum 150 is still another substantially conventional, rotating, fluted, vacuum drum like those described above, although certain modifications of drum 150 in accordance with the first aspect of the invention are discussed below. Elevator drum 150 conveys cigarettes 12 from transfer drum 140 past a second dual image camera box 120b to stacker drum 160. Camera box 120b may be substantially identical to box 120a. Accordingly, box 120b illuminates more than 180° of the exposed cylindrical surface of each cigarette passing box 120b on drum 150, and also forms two angularly spaced images of that surface. Again, these two images cover more than half the circumference of the cigarette surface. It will be noted, however, that the side of each cigarette exposed on drum 150 is diametrically opposite the side which is exposed on drum 110. Accordingly, the four images formed by camera boxes 120a and 120b collectively cover the entire circumference of the cylindrical surface of each cigarette. Indeed, each of these four images preferably overlaps the two circumferentially adjacent images to some extent to ensure that no part of the circumference of any cigarette is uninspected. It will also be noted that camera box 120b is adjacent an upper portion of drum 150, and that box 120b is angled down toward the cigarette that is being illuminated and imaged by that box. As in the case of camera box 120a, this helps keep dust and debris from accumulating on the front of box 120b and interfering with the performance of the box. Associating camera boxes 120a and 120b with two widely spaced drums 110 and 150 (i.e., drums which are spaced apart by two other drums 130 and 140) facilitates positioning both of the camera boxes so that they are adjacent the upper portion of a drum and directed downwardly so that neither accumulates dust and debris.

By the time each cigarette is approaching the top of elevator drum 150, the optical inspection apparatus of the first aspect of the invention has completed its inspection and analysis of the cigarette and has made a determination as to whether or not the cigarette has an acceptable appearance. If the appearance of the cigarette is acceptable, the cigarette is transferred from elevator drum 150 to stacker drum 160. On the other hand, if the appearance of the cigarette is not acceptable, transfer of the cigarette from drum 150 to drum 160 is prevented by a brief blast of pressurized air from inhibit transfer port 162 (see US patent No. 5 232 079 (with application Serial No. 884 741)); this document was published on 3 August 1993. Accordingly, the defective cigarette remains on drum 150. Drum 150 is modified so that the vacuum, which is turned off adjacent the nip between drums 150 and 160, is turned on again immediately beyond that nip. This holds any defective cigarettes which do not transfer to drum 160 to drum 150. These defective cigarettes are conveyed by drum 150 to stripper 152 which strips the defective cigarettes from the drum in order to reject them. The cigarettes extend axially beyond both end faces of drum 150 so that fingers of stripper 152 adjacent those end faces can engage the cigarettes and strip them from the drum. The rejected cigarettes collected by stripper 152 are conveyed out of the machine (e.g., by pressurized air flowing through the stripper).

Returning to the discussion of drum 160, cigarettes which have not been rejected by either the conventional Hauni reject mechanisms associated with reject drum 130 or the above-described reject mechanism of this invention transfer to drum 160 and are conveyed by that drum to the conventional stack forming region 170 of the machine. Stack former 170 removes the cigarettes from drum 160 and forms them into a stack for conveyance by mass flow conveyor 180. Alternatively, a conventional tray filler may be used to fill trays with the cigarettes removed from drum 160.

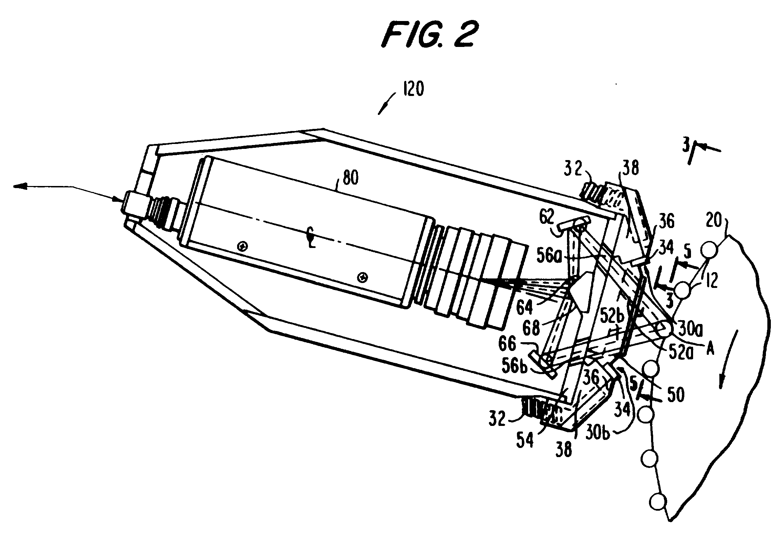

Turning now to a more detailed consideration of the construction and operation of dual image camera boxes 120a and 120b, the major components of a typical one of such boxes are shown in FIG. 2. Box 120 in FIG. 2 may be either box 120a or box 120b in FIG. 1. Similarly, drum 20 in FIG. 2 may be either drum 110 or drum 150 in FIG. 1. Although shown rotating counterclockwise in FIG. 2, drum 20 may rotate in either direction in front of box 120.

As drum 20 revolves, it positions cigarettes 12 one after another midway between two linear light sources 30a and 30b associated with camera box 120. In FIG. 2 the cigarette identified by the letter A is thus positioned midway between the light sources. The linear axis of each of light sources 30 is substantially parallel to the longitudinal axis of cigarette A (i.e., perpendicular to the plane in which FIG. 2 is drawn). Although light sources 30 may illuminate any substantial portion of the length of cigarette A (e.g., at least a length greater than the circumference of the cigarette), in the depicted preferred embodiment light sources 30 illuminate the entire length of the cigarette. Both of light sources 30 are aimed at the cylindrical surface of cigarette A. However, light sources 30 are spaced apart quite widely in the circumferential direction around cigarette A. Accordingly, light sources 30 collectively illuminate the entire exposed surface of cigarette A. For example, in the particular embodiment shown in FIG. 2 the angle between light sources 30 is approximately 118° so that approximately 270° of the circumference of cigarette A is illuminated by the combined effect of the two light sources. The illumination of cigarette A from light sources 30 is preferably both axially and circumferentially quite uniform and free from shadows (e.g., from cigarette A itself and from other cigarettes which are circumferentially adjacent to cigarette A on drum 20).

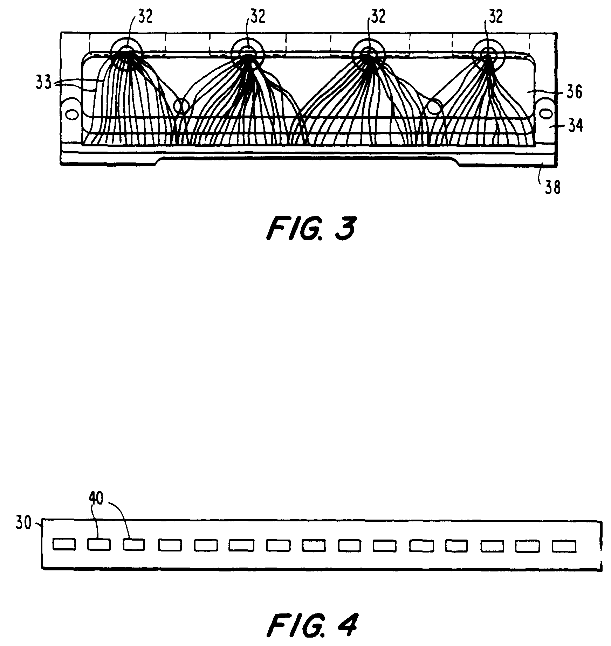

Light sources 30 may be provided in any of several ways. In the embodiment shown in FIGS. 2 and 3, for example, optical fibers are used. The ends 33 of several bundles 32 of optical fibers are fanned or combed out in a linear array behind a translucent plastic (e.g., Lexan) strip 34. This array of optical fibers is stabilized and aimed at cigarette A by being clamped between members 36 and 38. Strip 34 somewhat diffuses the light from the optical fibers to help promote uniform illumination of cigarette A. As an alternative (shown in FIG. 4), each light source 30 could be formed of a line of light emitting diodes 40.

Although the illumination produced by light sources 30 is described above as axially uniform, the light produced by these light sources can be "programmed" in various ways if desired. For example, to compensate for a possible difference in the distance between light sources 30 and cigarette A, the farther light source could be illuminated more brightly. Similarly, to enhance or deemphasize certain features or regions of cigarette A, corresponding axial portions of light sources 30 could be illuminated more or less brightly than other axial portions. Not all of each light source 30 may need to be illuminated at the same time, but instead the illumination could "scan" along the length of the light source. The "color" of light sources 30 can also be selected as desired. For example, it may be desired to use infrared (IR) light sources combined with IR filtering of the light reflected from cigarette A in order to reduce or eliminate disturbances from ambient light.

Regardless of the structure of light sources 30, they are preferably strobed (i.e., briefly illuminated) each time a cigarette is properly positioned between them on drum 20. This has the effect of "freezing" the motion of the cigarette being inspected.

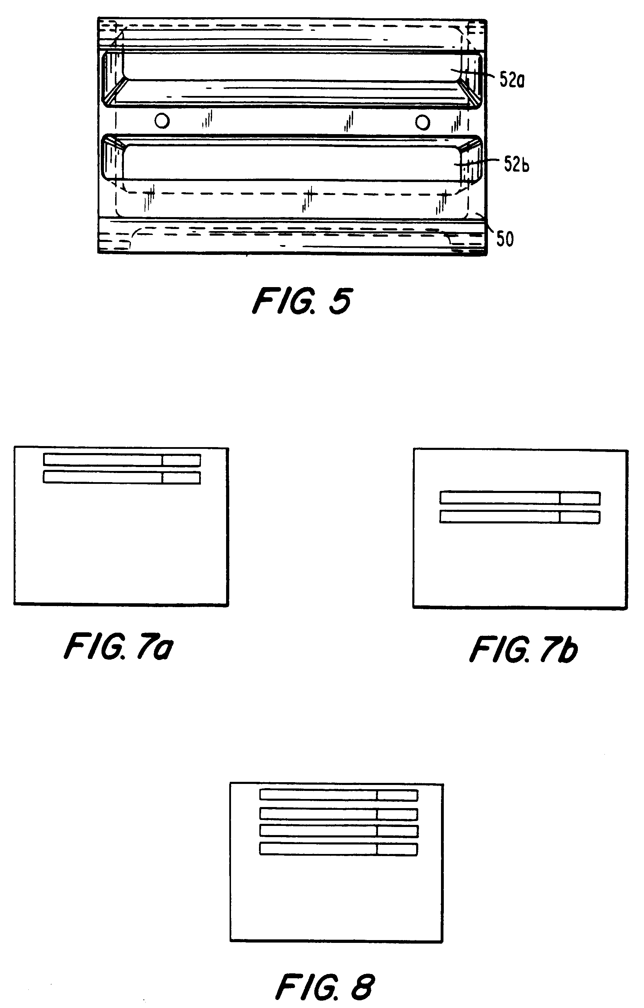

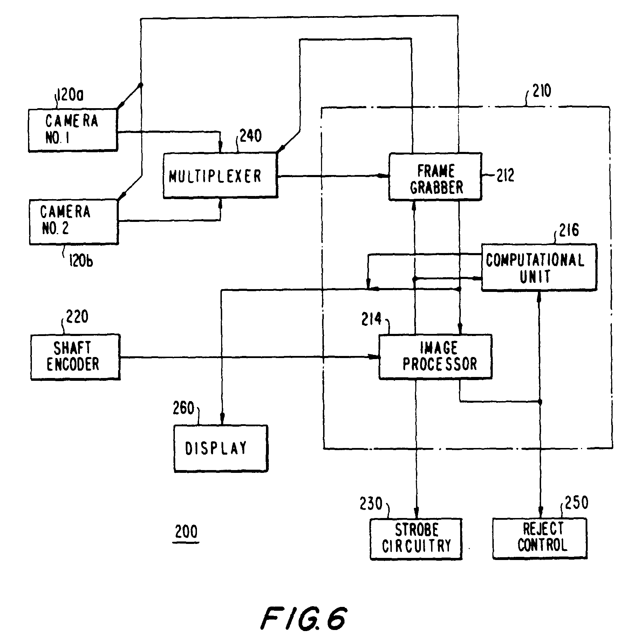

Light reflected from two circumferentially different (although preferably immediately adjacent or even somewhat overlapping) regions of cigarette A illuminated by light sources 30 passes through apertures 52a and 52b in aperture plate 50 which is located between light sources 30 opposite cigarette A. Like light sources 30, apertures 52 are preferably linear and parallel to the longitudinal axis of cigarette A (see also FIG. 5). Although apertures 52 could be shorter (e.g., in the event that light sources 30 illuminate only a portion of the length of cigarette A), in the depicted preferred embodiment in which light sources 30 illuminate the full length of cigarette A, apertures 52 are also long enough to pass light reflected from the entire length of the cigarette. The thickness of aperture plate 50 and the sizes and shapes of apertures 52 are preferably chosen to mask light reflected from extraneous surfaces such as the surfaces of the cigarettes adjacent to cigarette A on drum 20. In addition, the masking effect of apertures 52 is preferably enhanced by another aperture plate 54 behind plate 50 with apertures 56 that are optically aligned with apertures 52 to thereby effectively increase the thickness of plate 50. Although between light sources 30 and therefore closer together than the light sources, apertures 52 are nevertheless spaced sufficiently far apart circumferentially of cigarette A so that collectively they pass light reflected from at least half (and preferably somewhat more than half) the circumference of that cigarette. For example, in the particular embodiment shown in FIG. 2 the angle between the optical paths defined by apertures 52 is approximately 57° so that approximately 240° of the circumference of cigarette A is imaged by the combined effect of these two apertures.

The reflected light passing through aperture 52a is directed to one portion of the photosensitive image surface of conventional video camera 80 by mirrors 62 and 64. Similarly, the reflected light passing through aperture 52b is directed to another portion of the image area of camera 80 by mirrors 66 and 68. Accordingly, camera 80 receives image information for at least half (preferably more than half) the circumference of the surface of cigarette A and produces a video output signal indicative of all of that image information.

In order to ensure that both of the images received by camera 80 are focused, the length of the paths along which both images travel must be the same. Mirrors 62, 64, 66, and 68 are therefore positioned to make these two image paths the same length. In addition, for reasons that will become more apparent hereafter, it may be desirable to make the images fall on a particular portion of the camera screen (e.g., on a portion of the screen which is at or near the start of the scanning sequence). This can be accomplished by appropriate choice of such factors as the locations and angles of apertures 52 and mirrors 62, 64, 66, and 68.

Although various types of video cameras can be employed, in the preferred embodiments in which images must be captured at very high speeds (e.g., at the rate of approximately 10,000 per minute), camera 80 is preferably a high speed, charge coupled device ("CCD") camera.

FIG. 6 shows an illustrative embodiment of control and analysis apparatus 200 for the optical inspection systems of the first aspect of the invtion. Much of apparatus 200 is commercially available optical inspection apparatus (e.g., the 400 VPC machine vision system available from Pattern Processing Technologies, Inc. of Eden Prairie, Minnesota, although this apparatus has been specially adapted and programmed as discussed below in accordance with the present invention. A central component of apparatus 200 is processor 210. Processor 210 includes three major subsystems. These are frame grabber 212, image processor 214, and computational unit 216 (e.g., a conventional microprocessor).

Shaft encoder 220 is associated with the mechanical portion of the cigarette making machine (e.g., the apparatus shown in FIG. 1) and produces an output signal pulse after each predetermined increment of motion of the machinery. For example, shaft encoder 220 may be thought of as producing an output pulse each time a cigarette is positioned at location A (FIG. 2) opposite either of camera boxes 120. (Although not mentioned previously, it will be understood that camera boxes 120 are preferably positioned in FIG. 1 so that both boxes have a cigarette at the associated location A at the same time.)

Image processor 214 receives the above-mentioned shaft encoder pulses and causes the remainder of apparatus 200 to perform one complete cycle of operation in response to each pulse. In particular, in response to receipt of a shaft encoder pulse indicating that a cigarette is at position A opposite each of camera boxes 120, image processor 214 causes strobe circuitry 230 to briefly illuminate the light sources 30 of both camera boxes 120. Image processor 214 also causes frame grabber 212 to begin the scanning of the cameras 80 in both camera boxes.

As suggested above, the cigarette images captured by one of boxes 120 (e.g., box 120a) are preferably directed to the portion of the photosensitive area of the camera 80 in that box which is first to be scanned, while the cigarette images captured by the other of boxes 120 (e.g., box 120b) are preferably directed to the portion of the photosensitive area of the camera 80 in the second box which is scanned immediately after the above-mentioned portion of the first camera has been scanned. This is illustrated by FIGS. 7a and 7b, which respectively show how the cigarette images fall on the photosensitive areas of the cameras in boxes 120a and 120b in the above-described example.

Frame grabber 212 initially controls multiplexer 240 to pass only the output signal of the camera in box 120a (assuming that the camera in that box receives the image shown in FIG. 7a). After the meaningful portion of the image captured by box 120a has been scanned, frame grabber 212 causes multiplexer 240 to switch so that it passes only the output signal of the camera in box 120b. Accordingly, the output signal of multiplexer 240 represents a composite of the FIGS. 7a and 7b images as shown in FIG. 8. Frame grabber 212 stops all scanning of the cameras in boxes 120 after all meaningful image information has been scanned. For example, in a preferred embodiment in which the photosensitive area of each camera is 640 pixels wide (parallel to the longitudinal axes of the cigarette images) by 480 pixels high, it may only be necessary to scan about 200 to 230 lines of the photosensitive areas of the cameras. The first 100 to 115 scan lines in the output signal of multiplexer 240 then come from the camera in box 120a, while the remaining 100 to 115 lines come from the camera in box 120b. The placement of the meaningful image information on the photosensitive areas of the cameras so that only portions of those areas need to be scanned, and the resulting partial scanning of the photosensitive areas, greatly increases the speed with which the system can process images.

In addition to controlling the scanning operations of the cameras in boxes 120, frame grabber 212 digitizes the analog video output signal of multiplexer 240 (e.g., by associating an appropriate one of 256 digital gray scale values with each pixel). The resulting digital image data is passed to image processor 214 for analysis to determine if the cigarette images contain any defects.

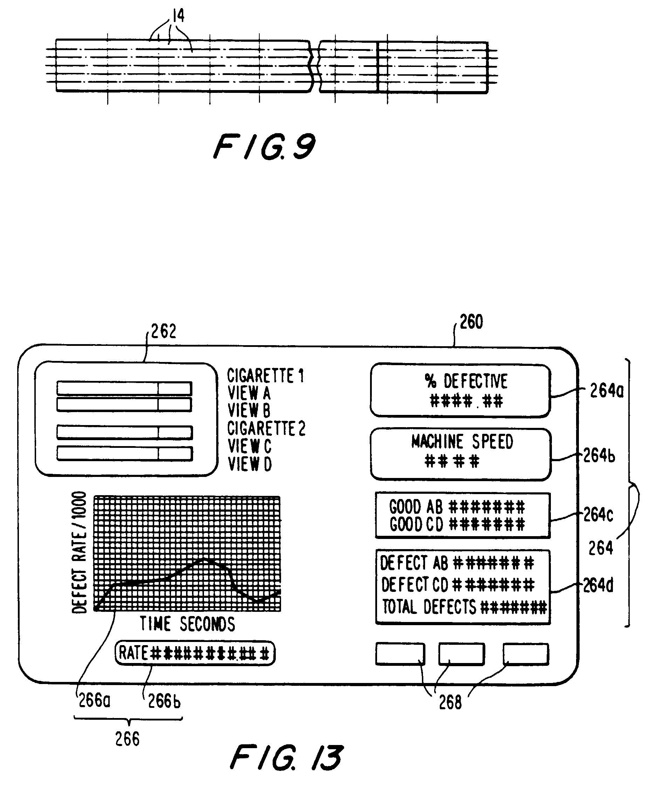

Although image processor 214 could analyze the cigarette images in other ways, in the depicted preferred embodiment image processor 214 subdivides each cigarette image into many small regions 14 as shown, for example, in FIG. 9. Each region 14 is a rectangle having a relatively long dimension aligned with the longitudinal axis of the cigarette and a short dimension which is only a fraction of the width of the cigarette image (transverse to the longitudinal axis of cigarette). For example, each region may be 40 pixels long (parallel to the longitudinal axis of the cigarette) by two pixels wide. Use of such fairly small regions facilitates detection of relatively small image defects. Use of regions which are only a small fraction of the width of the cigarette images (perpendicular to the longitudinal axis of the cigarette) helps the system compensate or adjust for possible nonuniformity in the level of illumination of the cigarette in the circumferential direction. This latter point will become more apparent as the discussion proceeds.

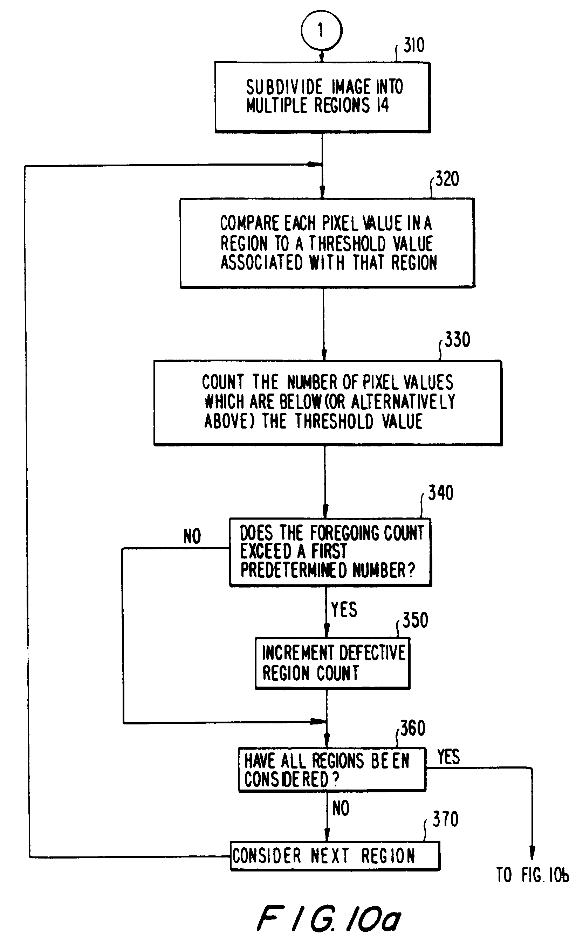

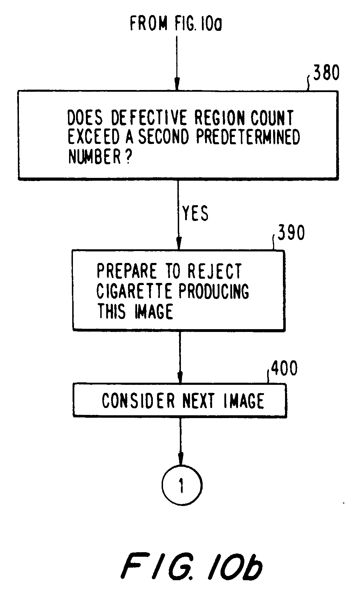

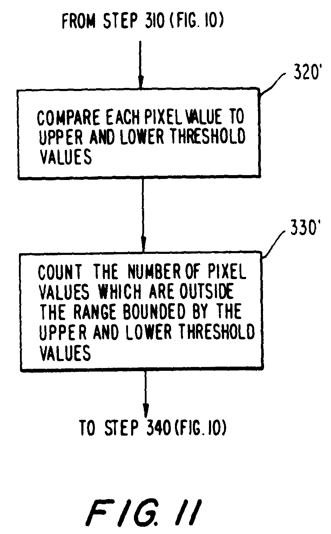

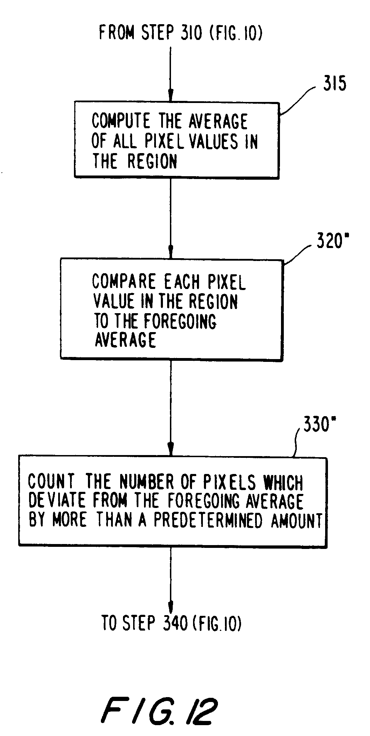

Image processor 214 separately analyzes the pixel values in each of regions 14. Again, any of several techniques can be used for this analysis, but three exemplary techniques will be discussed here with reference to FIGS. 10-12. In the first technique (FIG. 10), after performing step 310 to subdivide the image into regions 14 as described above, image processor 214 compares each of the pixel values associated with a region to a predetermined threshold value associated with that region (step 320). If more than a predetermined number of pixel values are below (or alternatively above) that threshold value (steps 330 and 340), the associated image region is identified as defective (step 350). If a predetermined number of regions (e.g., one or more) are thus found to be defective (step 380), the associated cigarette is identified as defective (step 390) and is therefore rejected when it reaches the point at which it would otherwise be transferred from drum 150 to drum 160 in the apparatus of FIG. 1.

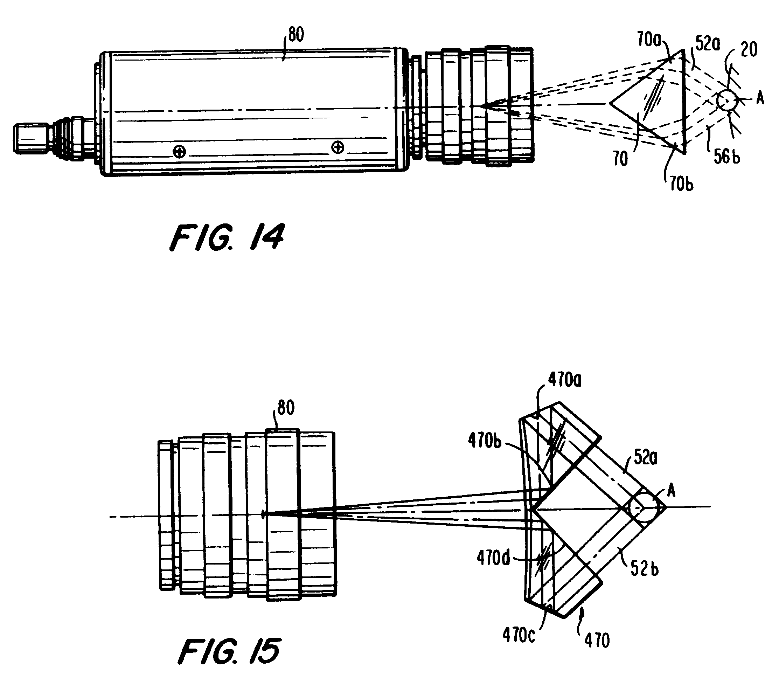

A variation of the foregoing technique (shown in FIG. 11) is for image processor 214 to compare each pixel value in each region 14 to two predetermined threshold values associated with that region (step 320'), and to count the number of pixels having values outside the range between those thresholds (step 330'). If the resulting count is more than a predetermined number (step 340), the region is identified as having a defective image (step 350).

Another technique for analyzing the pixel values in each region 14 is shown in FIG. 12. (FIG. 12 bears a similar relationship to FIG. 10 that FIG. 11 bears to FIG. 10, namely, the basic analytical process is shown in FIG. 10, but steps 320 and 330 in that FIG. are replaced by steps 320' and 330' in FIG. 11 or steps 315, 320", and 330" in FIG. 12.) In FIG. 12 image processor 214 computes the average of all of the pixel values in each region (step 315). Each pixel value in the region is then compared to this average (step 320''). If more than a predetermined number of pixels have values which deviate from this average by more than a predetermined amount (steps 330" and 340), the region is identified as having a defective image (step 350). Processing then continues as described above in connection with FIG. 10. The technique of FIG. 12 helps render the apparatus insensitive to changes in illumination level from image to image.

In addition to performing overall inspection of the cigarette images for defects in appearance, the system can be used to perform other tests on the cigarette. For example, the apparatus can ensure that the length and/or diameter of the cigarette are within acceptable limits. If the cigarettes contrasts sufficiently with the supporting drum surfaces, the system can readily locate the pixel regions 14 at which the transitions between cigarette image and drum image occur. The system can then determine whether these transitions have the proper spacing side to side (cigarette diameter) or end to end (cigarette length). If not, this can form a basis for rejecting the cigarette. Other properties such as the straightness of the above-mentioned transition regions can also be tested to detect defects such as "flags" (wrapping components which are not properly or fully glued down), improperly cut ends, etc.

Whenever image processor 214 detects a defective cigarette image as described above, it records that fact (e.g., in the appropriate stage of a shift register which shifts at the same rate as the cigarettes are being imaged). Thereafter, when enough inspection cycles have elapsed for the defective cigarette to travel from the imaging location (i.e., either the location opposite camera box 120a or the location opposite camera box 120b) at which it was found to be defective to the point at which it would normally transfer from drum 150 to drum 160, image processor 214 produces a reject output signal pulse which is applied to reject control 250. Reject control 250 causes inhibit transfer port 162 (FIG. 1) to emit the above-described pressurized air pulse required to prevent the defective cigarette from transferring from drum 150 to drum 160. This causes the defective cigarette to be rejected from the machine as is explained above in connection with FIG. 1.

In addition to inspecting and rejecting defective cigarettes, the system may also have a display 260 on which the images of the cigarettes and other data regarding the performance of the system are displayed. For example, FIG. 13 shows one possible arrangement of a video display 260. Four cigarette images are displayed in region 262. These may be the images most recently received by frame grabber 212. If desired, display 260 may hold for a few seconds any image found to be defective so that the operator of the machine can observe the defective image. Statistical information regarding the performance of the system is displayed in region 264. For example, in region 264a the percentage of defective cigarettes formed in this run may be displayed. In region 264b the current speed of the machine (e.g., in cigarettes per minute) may be displayed. In region 264c the number of good images (views A and B) received from camera box 120a and the number of good images (views C and D) received from camera box 120b in this run are displayed. In region 264d the number of defective views AB and CD, and the total number of defective views received in this run are displayed. Still other statistical information is displayed in region 266. This includes (in region 266a) a moving histogram showing the defect rate per 1000 cigarettes for the several most recent seconds of machine operation. And in region 266b a more current defect rate (e.g., the defect percentage for the most recently produced 1000 cigarettes) is displayed. Computational unit 216 (FIG. 6) may compute and provide the displayed statistical information (e.g., by counting frame initiation and reject initiation output pulses from image processor 214). Lastly, assuming that display is a so-called touch screen display, several touch screen "buttons" are displayed in region 268 for allowing the operator of the system to control certain aspects of the operation of the system (e.g., to reset the accumulation of statistical information or to modify the display in some desired way).

It will be understood that the foregoing is merely illustrative of the principles of the first aspect of the invention, and that various modifications can be made by those skilled in the art.

For example, as an alternative to the system of mirrors 62, 64, 66, and 68 shown in FIG. 2 for directing light from divergent apertures 52 to camera 80, a prism 70 may be used for this purpose as shown in FIG. 14. One operative portion 70a of prism 70 is used to redirect light (by refraction) from aperture 52a to camera 80, while another operative portion 70b of the prism is used to redirect light (by refraction) from aperture 52b to the camera. Another alternative prism embodiment 470 is shown in FIG. 15. In this alternative, light from aperture 52a enters one portion of the prism and is reflected internally off surfaces 470a and 470b in order to redirect the light toward camera 80. Light from aperture 52b enters another portion of prism 470 and is reflected internally off surfaces 470c and 470d in order to redirect the light toward camera 80.

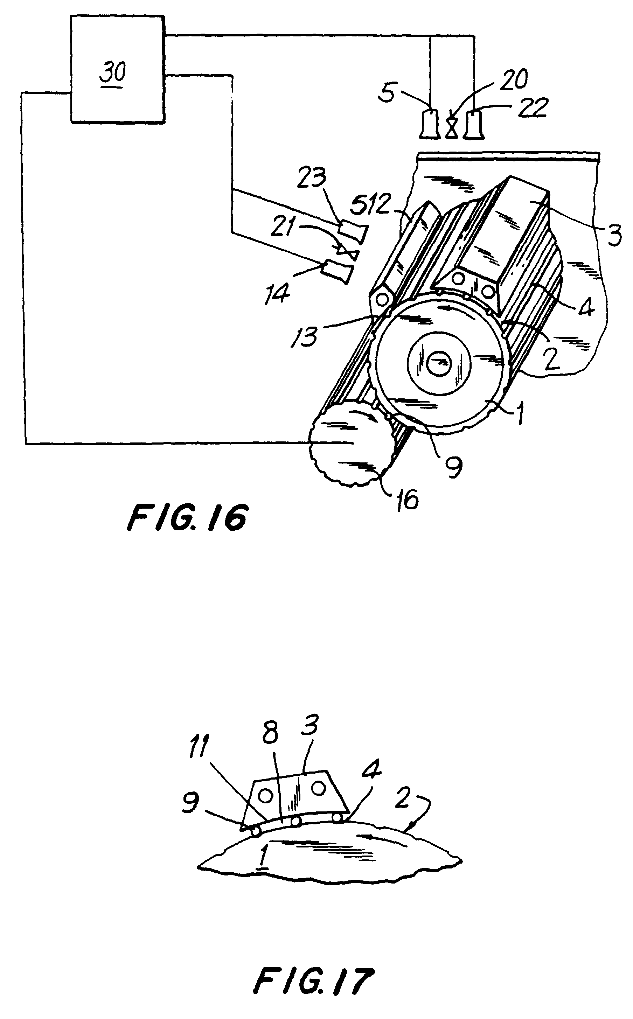

FIG. 16 shows the components of an embodiment of the second aspect of this invention. There is a rolling drum 1 that is preferably a suction drum. The drum has a peripheral rolling surface 2, which is caused, by a drive means (not shown), to advance at as contstant angular speed in a preferably counterclockwise direction. On the rolling surface 2, there are a plurality of successive axially parallel flutes 4 spaced from each other by identical distances. The flutes 4 extend at right angles to the direction of travel of the rolling surface 2. Also, each of the flutes 4 is arranged to hold tobacco rods, double-length cigarettes or single-length cigarettes in place. The drum 1 is rotatable on a shaft (not shown) that extends to a conventional part of the tipper. The drive means for the rolling drum is also a conventional part of the tipper. In alternative embodiments, it should be understood that while certain details are considered conventional to the tipper, those details would be provided for if the embodiment of the invention being considered did not reside on the tipper.

It should also be understood that although double-length cigarettes are referred to throughout this portion of the description to describe a preferred embodiment of this invention, one of ordinary skill in the art will appreciate that single-length cigarettes could also be inspected using this invention. As such, the term "completed cigarette" will be used to mean any cigarette whether single or double-length, and whether attached to a filter or not.

Working in conjunction with the rolling drum 1 is a first rolling block 3. The first rolling block 3 is preferably a stationary block having a concave counter-surface 11 cooperating with the rolling surface 2 to define therewith an elongated curved channel or gap 8 best shown in FIG. 12. The gap 8 between the first rolling block 3 and the rolling drum 1 has a length sufficient to roll the tipping paper and attach the filter plug to the tobacco rods. The width of the gap 8 is less than the diameter of the completed cigarette so that the two surfaces cause the cigarette to roll during travel through the gap 8. There are several auxiliary pieces of equipment that serve to feed the tobacco rods and filter plugs to the rolling drum and the invention. There is also auxiliary equipment to remove the completed cigarettes from the rolling drum. Such auxiliary equipment is conventional, and described, for example, in U.S. Patent No. 3,527,234 to Hinzmann.

The depth of flutes 4 on the rolling drum 1 is only a fraction of the width of the gap 8. Each flute 4 is in communication with the intake ends of several radial suction ducts (not shown) and the inner or discharge ends of suction ducts. These ducts provide suction to attract the tipping paper, the tobacco rods and the filter plugs. The suction from the ducts holds the cigarettes against the force of gravity and centrifugal force while they travel along the rolling drum 1 before and after tipping and inspection.

After the filter plug has been attached to the tobacco rods, the completed cigarette 9 moves clear of the first rolling block 3 as it rests in its respective flute 4, held there by the suction ducts. The complete cigarette 9 is then first inspected

It will be appreciated by one of skill in the art that should the rolling drum be located at the end of or after the tipper, then the first inspection will be after the completed cigarette is transferred to the rolling drum. A first camera 5 is provided, as shown in FIG. 16, to view the cigarette on the rolling surface 2 and is preferably two-dimensional. The first camera 5 has a lens arranged to receive light reflected off of the cigarette 9 as cigarette 9 travels past the first camera 5.

In a preferred embodiment, there is a light source 20 attached to first camera 5. The light source 20 is arranged such that the light radiation is directed towards the portion of the rolling surface 2 focused on by the first camera 5. The light source 20 provides sufficient light to allow each cigarette length to reflect enough light for the camera to properly operate, thereby allowing inspection.

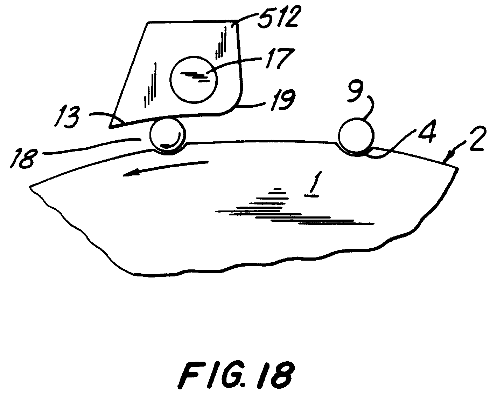

The cigarette 9 remains in its respective flute 4 as the rolling drum 1 continues in a preferably counterclockwise direction. After inspection by the first camera 5, the cigarette 9 is rolled approximately 180° by a second rolling block 12 working in conjunction with the rolling drum 1. As shown in FIG. 18, the second rolling block 12 is preferably a stationary block and has a concave counter-surface 13 cooperating with the rolling surface 2 to define therewith an elongated curved channel or gap 18. The gap 18 between the counter-surface 13 and the rolling surface 2 has an arc length sufficient to roll the cigarette 9 by approximately 180° from its position before entering the gap 18. The gap 18 has a width that is less than the diameter of the cigarette 9 so that the surfaces defining the gap cause the cigarette 9 to roll during travel through the gap. The concave counter-surface 13 has a surface that provides sufficient friction to rotate, but not damage, the cigarette 9. The counter-surface 13 has a front edge 19 to receive the cigarette 9. As the rolling surface 2 preferably travels in a counterclockwise direction, the cigarette 9 rolls in a preferably clockwise direction in its respective flute 4. While the rolling block 12 is described as stationary, it need only be stationary with respect to the rolling drum 1. In a preferred embodiment, the rolling block 12 is attached in an adjustable manner by an attachment means 17. The attachment means 17 allows the rolling block 12 to be adjusted for different cigarette diameters.

After the cigarette 9 has been rotated, a second camera 14 is provided, preferably two-dimensional, to inspect nearly 180° of the cigarette. In a preferred embodiment, there is a light source 21 attached to the second camera 14. The light source 21 is arranged such that the light given off is directed towards the portion of the rolling surface 2 focused on by the second camera 14. The light source 21 provides sufficient light to allow each cigarette to reflect enough light for the second camera 14 to properly operate, thereby allowing inspection.

The cameras 5, 14 are video cameras that may be conventional as known to those skilled in the art. The first camera 5 is placed such that the lens of the camera views the cigarette after the cigarette has moved past the first rolling block. The second camera 14 is placed such that the lens of the camera views the cigarette after it has been rotated approximately 180° by the second rolling block 12. Each camera views nearly 180° of the circumference of the cigarette 9. Therefore, since the portion of the cigarette 9 hidden to the first camera 5, is inspected by the second camera 14, nearly the entire cigarette is inspected on a single rolling drum.

In a preferred embodiment, in addition to the individual cameras 5 and 14, there are third and fourth cameras 22, 23. The third camera 22 is arranged to view the cigarette at the same location on the rolling surface 2 as the first camera 5 and is also connected to the vision system 30. The fourth camera 23 arranged to view the cigarette at the same location on the rolling surface 2 as the second camera 14. More than one camera viewing the cigarette at each inspection point allows more than 180° of inspection of the cigarette's circumference. Thus, it is possible to inspect the entire cigarette circumference. Alternatively, any method to get two views of the completed cigarette at each of the two inspection points will allow for inspection of the entire cigarette circumference.

A vision system 30 is employed in this invention and may be conventional. The vision system 30 is connected to each of the first and second cameras 5, 14 to receive the signals outputted by the camera as a result of their having viewed the cigarette 9. Generally, the information received from the cameras is compared to a predetermined set of characteristics. The vision system 30 determines such characteristics and unsatisfactory conditions as stem holes, skewed or torn tipping, spots from glue, flavors or oil, tobacco under the rod seam, torn ends on the cigarette end, and the dimensions of the cigarette (including its length and diameter). For example, a vision monitoring system such as that produced by Pattern Processing Technologies, Inc., model 400 VPC^{TM} will serve the purposes of this invention. See also U.S. Patent No. 3,049,588 to Barnett for a camera system used to inspect and compare an object to a standard.

After the second camera inspection, the cigarette 9 passes to a delivery/reject unit. As shown in FIG. 16, this comprises at least a delivery/reject drum 16. The delivery/reject drum 16 is a second vacuum drum with a traveling surface that rolls in a direction opposite from that of the rolling drum 1. The delivery/reject drum 16 receives the cigarette 9 from the rolling drum 1. In response to signals received from the vision system 30, the cigarette 9 is either rejected or, preferably, delivered by the delivery/reject drum to another part of the tipper that divides double-length cigarettes into two single-length cigarettes. Delivery of completed cigarettes by the delivery/reject drum can be to any machinery that directly follows the delivery/reject drum. For example, in an alternative embodiment, the apparatus may be located just upstream of a cigarette packer, and then the delivery/reject drum would deliver approved completed cigarettes directly to the packer.

A cigarette 9 is rejected if it does not meet the predetermined set of characteristics programmed into the vision system. Rejected completed cigarettes are sent to a recycle unit for recycling of at least the tobacco. Transfer of the cigarette 9 between the rolling drum 1 and the delivery/reject drum 16 may be conventional. See for example, U.S. Patent No. 3,527,234 to Hinzmann. The signals received from the vision system may also be conventional. See for example U.S. Patent No. 3,049,588 to Barnett.

It is clear that while two rolling blocks are discussed, only one rolling block is required for inspection of a cigarette. One of ordinary skill in the art will appreciate that any rolling surface and relative stationary block with two cameras and a vision system may be employed.

## Claims

1. Apparatus for optically inspecting substantially the entire cylindrical surface of an opaque, substantially cylindrical object, the surface portion having an axial length which is substantially greater than the circumference of the object and the surface portion extending circumferentially at least half way around the object, all of the said surface portion being inspected substantially instantaneously, the apparatus comprising:
a support (110) for the object so that the surface portion is exposed for optical inspection; and an image former (120a) characterised in that the image former comprises means for directing illumination at the surface portion from two directions which are circumferentially spaced from one another by a first predetermined amount and which are selected so that the light from the said two directions collectively illuminates all of the said surface portion, whereby light is reflected from the said surface portions in two directions;
means for detecting light reflected from the said surface portion comprising a photosensitive image area comprising more than two photosensitive sections; and
means for guiding light reflected from the surface portion in one of the two directions to a first photosensitive section and for guiding light reflected in the other of the two directions to a second photosensitive section, the first and second sections of the photosensitive image area defining an image portion of the photosensitive image area.

2. Apparatus according to claim 1 comprising:
a first support (110)(1) for supporting a cylindrical object (9) so that a first side of the cylindrical surface of the object is exposed for optical inspection;
a first image former (120a)(5) for forming a first image of the said first side comprising: first (30a) and second (30b) sources of illumination for illuminating the said first side from a respective different direction; a first photosensitive area comprising more than two photosensitive sections; and first (52a) and second (52b) reflected illumination guides for guiding light reflected from the said first side in different directions to respectively a first and a second photosensitive section of the first photosensitive area whereby the said first image is formed on the first and second photosensitive sections;
a second support (130,140,150) for receiving an object (9) from the first support (110)(1) so that a second side of the cylindrical surface of the object is exposed for optical inspection, the second side including all of the said surface not included in the first side;
a second image former (120b)(14) for forming a second image of the said second side comprising:
third (30a) and fourth (30b) sources of illumination for illuminating the said second side from a respective different direction; a second photosensitive area comprising more than two two photosensitive sections; and third (52a) and fourth (52b) reflected illumination guides for guiding light reflected in different directions from the said second side to respectively a first and a second photosensitive section of the second photosensitive area whereby the second image is formed in the first and second photosensitive sections.

3. Apparatus according to claim 2 wherein the first object support comprises:
a first drum (110) having a substantially cylindrical surface which is mounted for concentric rotation about a first axis, the cylindrical surface of the first drum being radially indented by a first longitudinal flute (112) parallel to the first axis, the object being supported in the first flute so that the said first side projects outward from the first flute.

4. Apparatus according to claim 3 wherein the first axis is substantially horizontal.

5. Apparatus according to claim 3 or 4 wherein the first image former (120a) is disposed relative to the first drum (110) so that the first image former (120a) forms the first image while the object is on the first drum at a locating above the first axis.

6. Apparatus according to any of claims 2 to 5 wherein the second object support (103,140,150) comprises:
a second drum (150) having a substantially cylindrical surface which is mounted for concentric rotation about a second axis, the cylindrical surface of the second drum being radially indented by a second longitudinal flute parallel to the second axis, the object being supported in the second flute so that the second side projects outward from the second flute.

7. Apparatus according to claim 6 wherein the second axis is substantially horizontal.

8. Apparatus according to claim 6 or 7 wherein the second image former (120b) is disposed relative to the second drum so that the second image former (120b) forms the second image while the object is on the second drum at a location above the second axis.

9. Apparatus according to claim 6, 7 or 8 wherein the second object support (130,140,150) further comprises:
a first rotating intermediate drum (130) for receiving the object from the first drum (110) after the first image former (120a) has formed the first image and for passing the object on toward the second drum (150); and
at least one additional intermediate drum (140) for receiving the object from the first intermediate drum (130) and for transferring the object to the second drum (150).

10. Apparatus according to any of claims 2 to 9 wherein the first predetermined fraction is more than half the circumference of the surface of the object.

11. Apparatus according to claim 10 wherein the second image includes a second predetermined fraction of the circumference of the said surface, the second fraction being more than half the circumference of the said surface.

12. Apparatus according to claim 11 wherein the first and second images overlap one another in two circumferentially spaced regions.

13. Apparatus according to any preceding claim wherein each of the first (30a) and second (30b) sources of illumination are linear illumination sources having a longitudinal axis substantially parallel to the longitudinal axis of the first side of the object.

14. Apparatus according to any of claims 2 to 13 wherein first (30a) and second (30b) sources of illumination are infrared illumination sources.

15. Apparatus according to any preceding claim wherein the two directions associated with the first (52a) and second (52b) reflected illumination guides are both between the two directions associated with the first (30a) and second (30b) sources of illumination.

16. Apparatus according to any of claims 2 to 15 wherein the first photosensitive area is in a first video camera (80), the first image former further comprising first means (62,64,66,68) for directing the reflected illumination guided by both of the first (52a) and second (52b) reflected illumination guided by both of the first (52a) and second (52b) reflected illumination guides to the photosensitive area of the first video camera (80).

17. Apparatus according to claim 16 wherein the first means (62,64,66,68) for directing directs the reflected illumination guided by the first (52a) and second (52b) reflected illumination guides to respective different portions of the photosensitive area of the first video camera (80).

18. Apparatus according to claim 16 or 17 wherein the first means (62,64,66,68) for directing makes the optical path length of the reflected illumination guided by both of the first (52a) and second (52b) reflected illumination guides substantially the same between the surface of the object and the photosensitive area of the first video camera (80).

19. Apparatus according to claim 16, 17 or 18 wherein the first means (62,64,66,68) for directing directs the reflected illumination to a section of the photosensitive area of the first video camera (80) which is relatively early in the scanning sequence of the first video camera (80).

20. Apparatus according to any of claims 2 to 19 wherein third (30a) and fourth (30b) sources of illumination are linear illumination sources having a longitudinal axis substantially parallel to the longitudinal axis of the said second side of the object.

21. Apparatus according to any of claims 2 to 20 wherein the third and fourth sources of illumination (30a) (30b) are infrared illumination sources.

22. Apparatus according to any claims 2 to 21 wherein the two directions associated with the third (52a) and fourth (52b) reflected illumination guides are both between the two directions associated with the third (30a) and fourth (30b) sources of illumination means.

23. Apparatus according to any claims 2 to 22 wherein the second photosensitive area is in a second video camera (80) comprising second image former further comprising; and second means (62,64,66,68) for directing the reflected illumination guided by both of the third (52a) and fourth (52b) reflected illumination guides to the photosensitive area of the second video camera (80).

24. Apparatus according to claim 23 wherein the second means (62,64,66,68) for directing directs the reflected illumination guided by the third (52a) and fourth (52b) reflected illumination guides to respective different portions of the photosensitive area of the second video camera (80).

25. Apparatus according to claim 23 or 24 wherein the second means (62,64,66,68) for directing makes the optical path length of the reflected illumination guided by both of the third (52a) and fourth (52b) reflected illumination guiding means substantially the same between the said surface of the object and the photosensitive area of the second video camera (80).

26. The apparatus according to claim 23, 24 or 25 wherein the second means (62,64,66,68) for directing directs the reflected illumination to a section of the photosensitive area of the second video camera (80) which is relatively early in the scanning sequence of the second video camera.

27. Apparatus according to any of claims 2 to 26 further comprising:
means (214) for analysing the first and second images in order to determine whether the object has an acceptable appearance; and
means (162) for conveying the object from the second object support (150) to a different destination depending on whether or not the said means (216) for analysing determines that the object has an acceptable appearance.

28. Apparatus according to claim 27 wherein the said means (214) for analysing comprises:
means for subdividing each of the images into a plurality of regions, each region being only a relatively small fraction of the dimension of the associated image perpendicular to the longitudinal axis of the object; and
means for separately processing the image information in each of the regions in order to determine the acceptability of the image information in the region.

29. Apparatus according to claim 28 wherein the image information associated with each of the said regions is represented by a plurality of pixel values, and wherein the means for processing comprises:
means for comparing each of the said pixel values to a predetermined value so that the image information in that region can be indicated to be unacceptable if more than a predetermined number of the said pixel values have a predetermined relationship to the said predetermined value.

30. Apparatus according to claim 29 wherein the said predetermined value is calculated as the average of all of the pixel values in the said region.

31. Apparatus according to any of claims 2 to 30 including the said first and second video cameras (80) of claim 15 and 22 and further comprising:
means (212) for simultaneously initiating the scanning of the first and second video cameras (80) ; and
means (240) for multiplexing the first and second video camera output signal, the composite video output signal being the first video camera output signal during the scanning of the first portion of the photosensitive area of the first video camera, and the composite video output signal being the second video camera output signal during the scanning of the second portion of the photosensitive area of the second video camera.

32. Apparatus according to any of claims 2 to 31 wherein the first (110) and second (150) object supports move the object relative to the first (120a) and second (120b) image formers, respectively, and wherein each of the first and second image formers includes:
stroboscopic illumination sources (30a)(30b) for momentarily illuminating the object as it moves relative to each of the first (120a) and second (120b) image formers in order to effectively stop the motion of the object relative to the image formers so that the first and second images of the object are effectively still images.

33. Apparatus according to any of claims 2 to 32 wherein the object is one of a plurality of similar objects which are handled one after another in sequence by the first (110) and second (150) object supports, and wherein the first (120a) and second (120b) image formers are respectively disposed relative to the first and second object supports so that each time a first object is positioned on the first object support (110) for formation of a first image of the first object, a second object is simultaneously positioned on the second object support (150) for formation of a second image of the second object.

34. Apparatus according to any preceding claim wherein the means for directing illumination comprises first (34a) and second (34b) substantially linear sources of illumination, each of which directs light at the said surface portion from a respective one of the said two directions associated with the said source, each light source being linearly aligned with the said surface portion.

35. Apparatus according to any preceding claim wherein the means for guiding comprises first (52a) and second (52b) linear apertures, each of which passes light reflected from the said surface portion in a respective one of the said two directions associated with the means for receiving, each aperture being linearly aligned with the said surface portion.

36. Apparatus according to any preceding claim further comprising: means (80) for detecting the light received by the means for receiving (52a,b) in order to produce a signal indicative of the light.

37. Apparatus according to claim 36 wherein the means for detecting comprises a video camera (80).

38. Apparatus according to claim 37 in which the means for guiding comprises first (52a) and second (52b) linear apertures, through which light reflected from the said surface portion in a respective one of the said directions passes to the video camera (80).

39. Apparatus according to claim 38 wherein the video camera (80) has an image receiving surface, and wherein the said means for direction (62,64,66,68) directs light passing through each of (52a,b) apertures to a respective different portion of the image receiving surface.

40. Apparatus according to claim 39 in which the said means for guiding comprises:
first (62) and second (66) mirrors for respectively reflecting light passing through the first (52a) and second (52b) apertures from different directions toward a common axis; and
third (66) and fourth (68) mirrors on respective opposite sides of the said common axis for respectively reflecting light from the first (62) and second (64) mirrors toward the image receiving surface.

41. Apparatus according to claim 40 wherein the said means for guiding comprises at least one prism for receiving light passing through one of the apertures (52a,b) and redirecting that light toward the image receiving surface.

42. Apparatus according to claim 41 wherein the prism has two operative portions, each of which redirects light passing through a respective one of the apertures (52a,b) toward the image receiving surface.

43. Apparatus according to claim 42 wherein the two operative portions cause convergence of the light passing through the apertures (52a,b).

44. Apparatus according to claim 43 wherein the two operative portions cause the convergence by refraction of the light passing through the two operative portions.

45. Apparatus according to claim 43 wherein the two operative portions cause the convergence by internal reflection of the light passing through the operative portions.

46. Apparatus according to claim 45 wherein each of the operative portions comprises:
a first surface for internally reflecting the light from a respective one of the apertures (52a,b) toward the light reflected by the first surface of the other one of the operative portions; and a second surface for internally reflecting the light reflected by the first surface of the operative portion toward the image receiving surface.

47. Apparatus according to any preceding claim wherein each of the sources (34a,b) of illumination comprises a linear array of the ends of a plurality of optical fibres (33).

48. Apparatus according to any preceding claim wherein each of the sources (34a,b) of illumination comprises a plurality of light emitting diodes (40) disposed in a linear array.

49. Apparatus according to claim 2 in which the first support is a rolling drum (1) having a travelling rolling surface (2) with a plurality of successive flutes (4) spaced from each other by identical distances and extending at right angles to the direction of travel of the rolling surface (2), the apparatus including a drive for the rolling drum;
in which the means for exposing a second side of the said surface comprises a rolling block (12) having a counter-surface (13) defining with the rolling surface (2) a gap (18) through which a cigarette (9) advances, the width of the gap (18) being less than the diameter of a cigarette so that the surfaces (2)(13) cause the cigarette to roll during travel through the gap;
in which the first image former comprises a first camera (5) arranged to view the cigarette before it enters the gap (18);
and in which the second image former comprises a second camera (14) arranged to view the cigarette (9) after it exits the gap (18), wherein each of the first and second cameras generates a first signal, the apparatus further comprising a vision system coupled to the first (5) and second (14) cameras, wherein the vision system receives the first signals from the cameras, to compare the first signals to a predetermined set of characteristics and generate a second signal based on the comparison; and
a delivery/reject unit having a delivery/reject drum (16) to receive a cigarette (9) from the rolling surface (2), the said unit being coupled to receive the second signal from the vision system for rejecting cigarettes that do not comply with the predetermined set of characteristics.

50. Apparatus according to claim 49 wherein the arc length of the gap (18) is sufficient to roll the cigarette (9) approximately 180° from its position before entering the gap.

51. Apparatus according to claim 49 or 50 further comprising a first light (20) source proximate the first camera (5).

52. Apparatus according to any of claims 49, 50 or 51 further comprising a second light source (21) proximate the second camera (14).

53. Apparatus according to any of claims 49 to 52 further comprising third (22) and fourth (23) cameras, the third camera being arranged to view the cigarette (9) at the same location on the rolling surface (2) as the first camera and being connected to the vision system, and the fourth camera being arranged to view the cigarette at the same location on the rolling surface as the second camera (14) and being connected to the vision system.

54. A method for optically inspecting substantially the entire cylindrical surface of a cylindrical object (9) comprising:
supporting the object on a first support surface (110)(1);
inspecting a first portion of the cylindrical surface of the object to generate a first image by illuminating the said first portion from two different directions and guiding the reflected light to two different photosensitive sections of a first photosensitive area;
rotating the object through 180°;
supporting the object on a second support surface (110)(1);
inspecting a second portion of the cylindrical surface of the object, the first and second portions together including the entire cylindrical surface of the object, to generate a second image by illuminating the said second portion from two different directions and guiding the reflected light to two different photosensitive sections of a second photosensitive area;
analysing each image to determine whether or not they meet a predetermined criterion; and
rejecting the object of the predetermined criterion is not met.

55. A method according to claim 54 of inspecting cigarettes comprising providing a cigarette (9) on a rolling surface (2), viewing the cigarette a first time with a first camera (5), rolling the cigarette approximately 180° with a rolling block (12), viewing the cigarette a second time, sending a first signal as a result of the first and second viewings to a vision system, comparing the first signal to a predetermined set of characteristics, transferring the cigarette to a delivery/reject unit (16), sending a second signal based on the comparison from the vision system to the delivery/reject unit and rejecting the cigarettes that do not comply with the predetermined set of characteristics.

56. A method according to claim 55 wherein the step the of viewing the cigarette (9) is viewed second time with a second camera (14).

57. A method according to claim 54 or 55 wherein the step of viewing the cigarette (9) a first time comprises viewing nearly 180° of the circumference of the cigarette.

58. A method according to any of claims 55, 56 or 57 wherein the step of viewing the cigarette (9) a second time comprises viewing nearly 180° of the circumference of the cigarette.

59. A method according to any claims 55 to 58 wherein the step of rolling the cigarette (9) comprises providing a rolling block (12) with a counter-surface (13) cooperating with the rolling surface (2) to define therewith a gap (18), the rolling surface moving the cigarette through the gap, and the gap having a length sufficient to roll the cigarette by approximately 180° from its position before entering the gap.

60. A method according claim 59 wherein the rolling block (12) in the step of rolling the cigarette (9) is stationary relative to the rolling surface.

## Patentansprüche

1. Vorrichtung zur optischen Inspektion von im wesentlichen der gesamten zylindrischen Oberfläche eines im wesentlichen undurchsichtigen zylindrischen Gegenstands, wobei der Oberflächenabschnitt eine Axiallänge besitzt, die wesentlich größer ist als der Umfang des Gegenstands, und sich der Oberflächenabschnitt am Umfang mindestens zur Hälfte um den Gegenstand herum erstreckt, wodurch der gesamte Oberflächenabschnitt im wesentlichen sofort untersucht wird, wobei die Vorrichtung umfaßt:
einen Halter (110) für den Gegenstand, so daß der Oberflächenabschnitt zur optischen Inspektion freiliegt; und einen Bilderzeuger (120a), dadurch gekennzeichnet, daß der Bilderzeuger Einrichtungen zum Lenken des Lichts auf den Oberflächenabschnitt von zwei Richtungen aus umfaßt, die am Umfang um ein erstes vorbestimmtes Maß voneinander beabstandet sind und so gewählt sind, daß das Licht aus den zwei Richtungen zusammen den gesamten Oberflächenabschnitt beleuchtet, wobei das Licht von den Oberflächenabschnitten in zwei Richtungen reflektiert wird;
Einrichtungen, um das von dem Oberflächenabschnitt reflektierte Licht zu erkennen, umfassend einen photoempfindlichen Bildbereich, bestehend aus mehr als zwei photoempfindlichen Abschnitten; und
Einrichtungen, um das von dem Oberflächenabschnitt in der einen von den beiden Richtungen reflektierte Licht zu einem ersten photoempfindlichen Abschnitt zu führen und das in der anderen von den beiden Richtungen reflektierte Licht zu einem zweiten photoempfindlichen Abschnitt zu führen, wobei der erste und der zweite Abschnitt des photoempfindlichen Bildbereiches einen Bildabschnitt des photoempfindlichen Bildempfangsbereiches bilden.

2. Vorrichtung nach Anspruch 1, umfassend:
einen ersten Halter (110) (1) zum Lagern eines zylindrischen Gegenstands (9), so daß eine erste Seite der zylindrischen Oberfläche des Gegenstands zur optischen Inspektion freiliegt;
einen ersten Bilderzeuger (120a) (5) zur Erzeugung eines ersten Bildes der ersten Seite, umfassend: eine erste (30a) und eine zweite (30b) Lichtquelle zum Beleuchten der ersten Seite aus einer jeweils anderen Richtung; einen ersten photoempfindlichen Bereich, umfassend mehr als zwei photoempfindliche Abschnitte; und eine erste (52a) und eine zweite (52b) Führung des reflektierten Lichts zum Führen des Lichts, das von der ersten Seite in verschiedenen Richtungen zu jeweils einem ersten und einem zweiten photoempfindlichen Abschnitt des ersten photoempfindlichen Bereiches reflektiert wird, wodurch das erste Bild auf dem ersten und dem zweiten photoempfindlichen Abschnitt gebildet wird;
einen zweite Halter (130, 140, 150) zur Aufnahme eines Gegenstands (9) von dem ersten Halter (110) (1), so daß eine zweite Seite der zylindrischen Oberfläche des Gegenstands zur optischen Inspektion freiliegt, wobei die zweite Seite den gesamten Teil der Oberfläche enthält, der nicht in der ersten Seite enthalten ist;
einen zweiten Bilderzeuger (120b) (14) zur Erzeugung eines zweiten Bildes der ersten Seite, umfassend:
eine dritte (30a) und eine vierte (30b) Lichtquelle zum Beleuchten der zweiten Seite aus einer jeweils anderen Richtung; einen zweiten photoempfindlichen Bereich, umfassend mehr als zwei photoempfindliche Abschnitte; und eine dritte (52a) und eine vierte (52b) Führung des reflektierten Lichts zum Führen von Licht, das von der zweiten Seite in verschiedenen Richtungen zu jeweils einem ersten photoempfindlichen Abschnitt und einem zweiten photoempfindlichen Abschnitt des ersten photoempfindlichen Bereiches reflektiert wird, wodurch das zweite Bild in dem ersten und dem zweiten photoempfindlichen Abschnitt gebildet wird.

3. Vorrichtung nach Anspruch 2, wobei der erste Gegenstandshalter umfaßt:
eine erste Trommel (110) mit einer im wesentlichen zylindrischen Oberfläche, die zwecks konzentrischer Umdrehung um eine erste Achse angebracht ist, wobei die zylindrische Oberfläche der ersten Trommel radial vertieft ist durch eine erste in Längsrichtung verlaufende Rinne (112) parallel zu der ersten Achse und der Gegenstand so in der ersten Rinne gehalten wird, daß die erste Seite aus der ersten Rinne nach außen herausragt.

4. Vorrichtung nach Anspruch 3, wobei die erste Achse im wesentlichen horizontal verläuft.

5. Vorrichtung nach Anspruch 3 oder 4, wobei der erste Bilderzeuger (120a) relativ zu der ersten Trommel (110) angeordnet ist, so daß der erste Bilderzeuger (120a) das erste Bild erzeugt, während sich der Gegenstand an einer Stelle über der ersten Achse auf der ersten Trommel befindet.

6. Vorrichtung nach einem der Ansprüche 2 bis 5, wobei der zweite Gegenstandshalter (103, 140, 150) umfaßt:
eine zweite Trommel (150) mit einer im wesentlichen zylindrischen Oberfläche, die zwecks konzentrischer Umdrehung um eine zweite Achse angebracht ist, wobei die zylindrische Oberfläche der zweiten Trommel radial vertieft ist durch eine zweite in Längsrichtung verlaufende Rinne parallel zu der ersten Achse und der Gegenstand so in der zweiten Rinne gehalten wird, daß die zweite Seite aus der ersten Rinne nach außen herausragt.

7. Vorrichtung nach Anspruch 6, wobei die zweite Achse im wesentlichen horizontal verläuft.

8. Vorrichtung nach Anspruch 6 oder 7, wobei der zweite Bilderzeuger (120b) relativ zu der zweiten Trommel (110) angeordnet ist, so daß der zweite Bilderzeuger (120b) das zweite Bild erzeugt, während sich der Gegenstand an einer Stelle über der zweiten Achse auf der zweiten Trommel befindet.

9. Vorrichtung nach Anspruch 6, 7 oder 8, wobei der zweite Gegenstandshalter (130, 140, 150) des weiteren umfaßt:
eine erste rotierende Zwischentrommel (130) zur Aufnahme des Gegenstands von der ersten Trommel (110), wenn der erste Bilderzeuger (120a) das erste Bild erzeugt hat, und zum Weitertransport des Gegenstands in Richtung zu der zweiten Trommel (150); und
mindestens eine weitere Zwischentrommel (140) zur Aufnahme des Gegenstands von der ersten Zwischentrommel (130) und zum Überführen des Gegenstands auf die zweite Trommel (150);

10. Vorrichtung nach einem der Ansprüche 2 bis 9, wobei der erste vorbestimmte Anteil mehr als die Hälfte des Umfangs der Oberfläche des Gegenstands ausmacht.

11. Vorrichtung nach Anspruch 10, wobei das zweite Bild einen zweiten vorbestimmten Anteil des Umfangs der Oberfläche des Gegenstands aufweist, wobei der zweite Anteil mehr als die Hälfte des Umfangs der Oberfläche des Gegenstands ausmacht.

12. Vorrichtung nach Anspruch 11, wobei das erste und das zweite Bild einander in zwei am Umfang beabstandeten Abschnitten überlappen.

13. Vorrichtung nach einem vorhergehenden Anspruch, wobei jede der ersten (30a) und zweiten (30b) Lichtquellen lineare Lichtquellen mit einer Längsachse sind, die im wesentlichen parallel zu der Längsachse der ersten Seite des Gegenstands verlaufen.

14. Vorrichtung nach einem der Ansprüche 2 bis 13, wobei die erste (30a) und die zweite (30b) Lichtquelle Infrarot-Lichtquellen sind.

15. Vorrichtung nach einem vorhergehenden Anspruch, wobei die zwei Richtungen, die der ersten (52a) und der zweiten (52b) Führung des reflektierten Lichts zugeordnet sind, beide zwischen den zwei Richtungen liegen, die der ersten (30a) und der zweiten (30b) Lichtquelle zugeordnet sind.

16. Vorrichtung nach einem der Ansprüche 2 bis 15, wobei sich der erste photoempfindliche Bereich in einer ersten Videokamera (80) befindet, wobei der erste Bilderzeuger des weiteren eine erste Einrichtung (62, 64, 66, 68) umfaßt, um das sowohl von der ersten (52a) als auch der zweiten (52b) Führung für reflektiertes Licht geführte reflektierte Licht auf den photoempfindlichen Bereich der ersten Videokamera (80) zu lenken.

17. Vorrichtung nach Anspruch 16, wobei durch die erste Lichtlenkeinrichtung (62, 64, 66, 68) die sowohl von der ersten (52a) als auch der zweiten (52b) Führung für reflektiertes Licht geführten reflektierten Lichts auf jeweils verschiedene Abschnitte des photoempfindlichen Bereichs der ersten Videokamera (80) lenkt.

18. Vorrichtung nach Anspruch 16 oder 17, wobei durch die erste Lichtlenkeinrichtung (62, 64, 66, 68) die Länge des Lichtleitweges des sowohl von der ersten (52a) als auch der zweiten (52b) Führung für reflektiertes Licht geführten reflektierten Lichts zwischen der Oberfläche des Gegenstands und dem photoempfindlichen Bereich der ersten Videokamera (80) im wesentlichen gleich wird.

19. Vorrichtung nach Anspruch 16, 17 oder 18, wobei die erste Lichtlenkeinrichtung (62, 64, 66, 68) das reflektierte Licht auf einen Abschnitt des photoempfindlichen Bereichs der ersten Videokamera (80) lenkt, der relativ früh in der Abtastabfolge der ersten Videokamera (80) erscheint.

20. Vorrichtung nach einem der Ansprüche 2 bis 19, wobei eine dritte (30a) und eine vierte (30b) Lichtquelle lineare Lichtquellen mit einer Längsachse sind, die im wesentlichen parallel zu der Längsachse der zweiten Seite des Gegenstands verlaufen.

21. Vorrichtung nach einem der Ansprüche 2 bis 20, wobei die dritte und die vierte Lichtquelle (30a) (30b) Infrarot-Lichtquellen sind.

22. Vorrichtung nach einem der Ansprüche 2 bis 21, wobei die zwei Richtungen, die der dritten (52a) und der vierten (52b) Führung des reflektierten Lichts zugeordnet sind, beide zwischen den zwei Richtungen liegen, die der dritten (30a) und der vierten (30b) Lichtquelle zugeordnet sind.

23. Vorrichtung nach einem der Ansprüche 2 bis 22, wobei sich der zweite photoempfindliche Bereich in einer zweiten Videokamera (80) befindet, wobei der zweite Bilderzeuger des weiteren eine zweite Einrichtung (62, 64, 66, 68) umfaßt, um das sowohl von der ersten (52a) als auch der zweiten (52b) Führung für reflektiertes Licht geführte reflektierte Licht auf den photoempfindlichen Bereich der zweiten Videokamera (80) zu lenken.

24. Vorrichtung nach Anspruch 23, wobei die zweite Lichtlenkeinrichtung (62, 64, 66, 68) die sowohl von der ersten (52a) als auch der zweiten (52b) Führung für reflektiertes Licht geführten reflektierten Lichts auf jeweils verschiedene Abschnitte des photoempfindlichen Bereichs der zweiten Videokamera (80) lenkt.

25. Vorrichtung nach Anspruch 23 oder 24, wobei durch die zweite Lichtlenkeinrichtung (62, 64, 66, 68) die Länge des Lichtleitweges des sowohl von der ersten (52a) als auch der zweiten (52b) Führung für reflektiertes Licht geführten reflektierten Lichts zwischen der Oberfläche des Gegenstands und dem photoempfindlichen Bereich der zweiten Videokamera (80) im wesentlichen gleich wird.

26. Vorrichtung nach Anspruch 23, 24 oder 25, wobei die zweite Lichtlenkeinrichtung (62, 64, 66, 68) das reflektierte Licht auf einen Abschnitt des photoempfindlichen Bereichs der zweiten Videokamera (80) lenkt, der relativ früh in der Abtastabfolge der zweiten Videokamera (80) erscheint.

27. Vorrichtung nach einem der Ansprüche 2 bis 26, des weiteren umfassend:
eine Analyseeinrichtung (214) für das erste und das zweite Bild, um festzustellen, ob der Gegenstand ein akzeptables Aussehen aufweist; und
eine Einrichtung (162), um den Gegenstand von dem zweiten Gegenstandshalter (150) zu einem anderen Bestimmungsort zu befördern, was davon abhängt, ob die Analyseeinrichtung (216) feststellt oder nicht feststellt, daß der Gegenstand ein akzeptables Aussehen aufweist.

28. Vorrichtung nach Anspruch 27, wobei die Analyseeinrichtung (214) umfaßt:
eine Einrichtung, um jedes der Bilder in eine Mehrzahl von Abschnitten aufzuteilen, wobei jeder Abschnitt nur einen relativ geringen Anteil an der Abmessung des zugeordneten Bildes senkrecht zu der Längsachse des Gegenstands darstellt; und
eine Einrichtung, um separat die Bildinformationen in jedem der Abschnitte zu verarbeiten, um die Akzeptabilität der Bildinformationen in dem Abschnitt festzustellen.

29. Vorrichtung nach Anspruch 28, wobei die jedem der Abschnitte zugeordneten Bildinformationen durch eine Mehrzahl von Pixel-Werten dargestellt wird, und wobei die Verarbeitungseinrichtung umfaßt:
eine Einrichtung, um jeden der Pixel-Werte mit einem vorbestimmten Wert zu vergleichen, so daß die Bildinformationen in diesem Abschnitt als unakzeptabel angezeigt werden können, wenn mehr als eine vorbestimmte Zahl der Pixel-Werte ein vorbestimmtes Verhältnis zu dem vorbestimmten Wert besitzt.

30. Vorrichtung nach Anspruch 29, wobei der vorbestimmte Wert als Durchschnitt aller Pixel-Werte in dem Abschnitt errechnet wird.

31. Vorrichtung nach einem der Ansprüche 2 bis 30, einschließend die erste und die zweite Videokamera (80) von Anspruch 15 und 22, und des weiteren umfassend:
eine Einrichtung (212), um gleichzeitig das Abtasten in der ersten und der zweitenVideokamera (80) auszulösen; und
eine Einrichtung (240), um das Ausgangssignal der ersten und der zweiten Videokamera als Multiplexsignal zu formen, wobei das zusammengesetzte Video-Ausgangssignal das Ausgangssignal der ersten Videokamera während des Abtastens des ersten Abschnitts des photoempfindlichen Bereiches der ersten Videokamera ist und das zusammengesetzte Video-Ausgangssignal das Ausgangssignal der zweiten Videokamera während des Abtastens des zweiten Abschnitts des photoempfindlichen Bereiches der zweiten Videokamera ist.

32. Vorrichtung nach einem der Ansprüche 2 bis 31, wobei der erste (110) und der zweite (150) Gegenstandshalter den Gegenstand relativ zu dem ersten (120a) bzw. dem zweiten (120b) Bilderzeuger bewegen, und wobei der erste und der zweite Bilderzeuger jeweils aufweisen:
stroboskopische Lichtquellen (30a) (30b), um den Gegenstand einen Augenblick lang zu beleuchten, wenn sich dieser relativ jeweils zu dem ersten (120a) bzw. zu dem zweiten (120b) Bilderzeuger bewegt, um effektiv die Bewegung des Gegenstands relativ zu den Bilderzeugern zu stoppen, so daß das erste und das zweite Bild des Gegenstands effektiv unbewegliche Bilder sind.

33. Vorrichtung nach einem der Ansprüche 2 bis 32, wobei der Gegenstand einer aus einer Mehrzahl von ähnlichen Gegenständen ist, die von dem ersten (110) und dem zweiten (150) Gegenstandshalter in Folge nacheinander befördert werden, und wobei der erste (120a) und der zweite (120b) Bilderzeuger jeweils relativ zu dem ersten und dem zweiten Gegenstandshalter angeordnet sind, so daß jedesmal dann, wenn ein erster Gegenstand auf dem ersten Gegenstandshalter (110) positioniert wird, um ein erstes Bild des ersten Gegenstands zu erzeugen, gleichzeitig ein zweiter Gegenstand auf dem zweiten Gegenstandshalter (150) positioniert wird, um ein zweites Bild des zweiten Gegenstands zu erzeugen.

34. Vorrichtung nach einem vorhergehenden Anspruch, wobei die Lichtlenkeinrichtung eine erste (34a) undeine zweite (34b) im wesentlichen lineare Lichtquelle umfaßt, von denen jede Licht aus jeweils einer von den der Quelle zugeordneten zwei Richtungen auf den Oberflächenabschnitt lenkt, wobei jede Lichtquelle linear mit dem Oberflächenabschnitt ausgerichtet ist.

35. Vorrichtung nach einem vorhergehenden Anspruch, wobei die Führungseinrichtung eine erste (52a) und eine zweite (52b) lineare Öffnung umfaßt, von denen jede Licht hindurchläßt, das in jeweils einer von den zwei der Empfangseinrichtung zugeordneten Richtungen von dem Oberflächenabschnitt reflektiert wird, und jede Öffnung linear mit dem Oberflächenabschnitt ausgerichtet ist.

36. Vorrichtung nach einem vorhergehenden Anspruch, des weiteren umfassend:
eine Einrichtung (80), um das von der Empfangseinrichtung (52a, b) empfangene Licht zu erkennen, um ein Signal zu erzeugen, das kennzeichnend für das Licht ist.

37. Vorrichtung nach Anspruch 36, wobei die Erkennungseinrichtung eine Videokamera (80) umfaßt.

38. Vorrichtung nach Anspruch 37, wobei die Führungseinrichtung eine erste (52a) und eine zweite (52b) lineare Öffnung umfaßt, durch die das Licht, das in jeweils einer von den zwei Richtungen von dem Oberflächenabschnitt reflektiert wird, zu der Videokamera (80) läuft.

39. Vorrichtung nach Anspruch 38, wobei die Videokamera (80) eine Bildempfangsfläche besitzt, und wobei die Lichtlenkeinrichtung (62, 64, 66, 68) das Licht, das durch jede (52a, b) der Öffnungen läuft, zu einem jeweils anderen Abschnitt der Bildempfangsfläche lenkt.

40. Vorrichtung nach Anspruch 39, wobei die Führungseinrichtung umfaßt:
einen ersten (62) und einen zweiten (66) Spiegel, um jeweils das Licht, das aus verschiedenen Richtungen durch die erste (52a) und die zweite (52b) Öffnungen läuft, in Richtung zu einer gemeinsamen Achse zu reflektieren; und
einen dritten (66) und einen vierten (68) Spiegel auf jeweils einander gegenüberliegenden Seiten der gemeinsamen Achse, um jeweils Licht von dem ersten (62) und dem zweiten (64) Spiegel in Richtung zu der Bildempfangsfläche zu reflektieren.

41. Vorrichtung nach Anspruch 40, wobei die Führungseinrichtung mindestens ein Prisma umfaßt, um das durch eine der Öffnungen (52a, b) laufende Licht zu empfangen und dieses Licht in Richtung zu der Bildempfangsfläche umzulenken.

42. Vorrichtung nach Anspruch 41, wobei das Prisma zwei Arbeitsbereiche besitzt, von dem jeder das durch jeweils eine der Öffnungen (52a, b) laufende Licht in Richtung zu der Bildempfangsfläche umlenkt.

43. Vorrichtung nach Anspruch 42, wobei die beiden Arbeitsbereiche die Konvergenz des durch die Öffnungen (52a, b) laufenden Lichts bewirken.

44. Vorrichtung nach Anspruch 43, wobei die beiden Arbeitsbereiche die Konvergenz durch Brechung des durch die beiden Arbeitsbereiche laufenden Lichts bewirken.

45. Vorrichtung nach Anspruch 43, wobei die beiden Arbeitsbereiche eine Konvergenz durch innere Reflexion des durch die beiden Arbeitsbereiche laufenden Lichts bewirken.

46. Vorrichtung nach Anspruch 45, wobei jeder der Arbeitsbereiche umfaßt:
eine erste Fläche, um intern das Licht von jeweils der einen der Öffnungen (52a, b) in Richtung zu dem von der ersten Fläche der anderen der Arbeitsbereiche reflektierten Licht zu reflektieren; und eine zweite Fläche, um intern das von der ersten Fläche des Arbeitsbereiches reflektierte Licht in Richtung zu der Bildempfangsfläche zu reflektieren.

47. Vorrichtung nach einem vorhergehenden Anspruch, wobei jede der Lichtquellen (34a, b) eine lineare Anordnung der Enden einer Mehrzahl von Lichtleitfasern (33) umfaßt.

48. Vorrichtung nach einem vorhergehenden Anspruch, wobei jede der Lichtquellen (34a, b) eine Mehrzahl von in einer linearen Anordnung angeordneten Leuchtdioden (40) umfaßt.

49. Vorrichtung nach Anspruch 2, wobei der erste Halter eine Rolltrommel (1) ist, die eine laufende Rollfläche (2) mit einer Mehrzahl von aufeinanderfolgenden Rinnen (4) besitzt, die in gleichen Abständen voneinander beabstandet sind und rechtwinklig zu der Laufrichtung der Rollfläche (2) verlaufen, wobei die Vorrichtung einen Antrieb für die Rolltrommel aufweist;
wobei die Einrichtung zum Freilegen einer zweiten Seite der Oberfläche einen Rollblock (12) mit einer Gegenfläche (13) umfaßt, die mit der Rollfläche (2) einen Spalt (18) bildet, durch den eine Zigarette (9) hindurchläuft, wobei die Breite des Spalts (18) kleiner ist als der Durchmesser einer Zigarette, so daß die Flächen (2) (13) bewirken, daß die Tigarette beim Hindurchlaufen durch den Spalt rollt;
wobei der erste Bilderzeuger eine erste Kamera (5) umfaßt, die so angeordnet ist, daß sie die Zigarette betrachtet, bevor diese in den Spalt (18) eintritt;
und wobei der zweite Bilderzeuger eine zweite Kamera (14) umfaßt, die so angeordnet ist, daß sie die Zigarette (9) betrachtet, nachdem diese aus dem Spalt (18) ausgetreten ist, wobei die erste und die zweite Kamera jeweils ein erstes Signal erzeugen, und wobei die Vorrichtung des weiteren ein mit der ersten (5) und der zweiten (14) Kamera gekoppeltes Sichtbarmachungssystem umfaßt, wobei das Sichtbarmachungssystem die ersten Signale von den Kameras empfängt, um die ersten Signale mit einer vorbestimmten Reihe von Merkmalen zu vergleichen und ein auf dem Vergleich basierendes zweites Signal zu erzeugen; und
eine Zuführungs- und Zurückweisungseinheit mit einer Zuführungs- und Zurückweisungstrommel (16), um eine Zigarette (9) von der Rollfläche (2) aufzunehmen, wobei die Einheit so gekoppelt ist, daß sie das zweite Signal von dem Betrachtungssystem empfängt, um Zigaretten zurückzuweisen, die nicht mit der vorbestimmten Reihe von Merkmalen übereinstimmen.

50. Vorrichtung nach Anspruch 49, wobei die Bogenlänge des Spalts (18) ausreicht, um die Zigarette (9) um annähernd 180° aus ihrer Position zu rollen, bevor diese in den Spalt eintritt.

51. Vorrichtung nach Anspruch 49 oder 50, des weiteren umfassend eine erste Lichtquelle (20) nahe an der ersten Kamera (5).

52. Vorrichtung nach einem der Ansprüche 49, 50 oder 51, des weiteren umfassend eine zweite Lichtquelle (21) nahe an der zweiten Kamera (14).

53. Vorrichtung nach einem der Ansprüche 49 bis 52, des weiteren umfassend eine dritte (22) und eine vierte (23) Kamera, wobei die dritte Kamera so angeordnet ist, daß sie die Zigarette (9) an der gleichen Stelle auf der Rollfläche (2) betrachtet wie die erste Kamera und mit dem Sichtbarmachungssystem verbunden ist, und die vierte Kamera so angeordnet ist, daß sie die Zigarette an der gleichen Stelle auf der Rollfläche betrachtet wie die zweite Kamera (14) und mit dem Sichtbarmachungssystem verbunden ist.

54. Verfahren zur optischen Inspektion von im wesentlichen der gesamten zylindrischen Oberfläche eines zylindrischen Gegenstands (9), umfassend:
das Lagern des Gegenstands auf einer ersten Haltefläche (110) (1);
die Inspektion eines ersten Abschnitts der zylindrischen Oberfläche des Gegenstands zur Erzeugung eines ersten Bildes durch Beleuchten des ersten Abschnitts aus zwei verschiedenen Richtungen und das Führen des reflektierten Lichts zu zwei verschiedenen photoempfindlichen Abschnitten eines ersten photoempfindlichen Bereiches;
das Drehen des Gegenstands um 180°
das Lagern des Gegenstands auf einer zweiten Haltefläche (110) (1);
die Inspektion eines zweiten Abschnitts der zylindrischen Oberfläche des Gegenstands, wobei der erste und der zweite Abschnitt zusammen die gesamte zylindrische Oberfläche des Gegenstands umfassen, um ein zweites Bild durch Beleuchten des zweiten Abschnitts aus zwei verschiedenen Richtungen zu erzeugen und das reflektierte Licht zu zwei verschiedenen photoempfindlichen Abschnitten eines zweiten photoempfindlichen Bereiches zu führen;
das Analysieren jedes Bildes, um festzustellen, ob diese ein vorbestimmtes Kriterium erfüllen oder nicht; und
das Zurückweisen des Gegenstands, wenn das vorbestimmte Kriterium nicht erfüllt wird.

55. Verfahren zur Inspektion von Zigaretten nach Anspruch 54, umfassend das Bereitstellen einer Zigarette (9) auf einer Rollfläche (2), das Betrachten der Zigarette zum ersten Mal mit einer ersten Kamera (5), das Rollen der Zigarette um annähernd 180° mit einem Rollblock (12), das Betrachten der Zigarette zum zweiten Mal, das Absetzen eines ersten Signals an ein Sichtbarmachungssystem als Ergebnis der ersten und der zweiten Betrachtung, das Vergleichen des ersten Signals mit einer vorbestimmten Reihe von Merkmalen, das Überführen der Zigarette zu einer Zuführungs- und Zurückweisungseinheit (16) das Absetzen eines auf dem Vergleich basierenden, zweiten Signals von dem Sichtbarmachungssystem zu der Zuführungs- und Zurückweisungseinheit und das Zurückweisen der Zigaretten, die nicht der vorbestimmten Reihe von Merkmalen entsprechen.

56. Verfahren nach Anspruch 55, wobei der Schritt des Betrachtens der Zigarette (9) zum zweiten Mal mit einer zweiten Kamera (14) erfolgt.

57. Verfahren nach Anspruch 54 oder 55, wobei der Schritt des Betrachtens der Zigarette (9) zum ersten Mal das Betrachten von fast 180° des Umfangs der Zigarette umfaßt.

58. Verfahren nach Anspruch 55, 56 oder 57, wobei der Schritt des Betrachtens der Zigarette (9) zum zweiten Mal das Betrachten von fast 180° des Umfangs der Zigarette umfaßt.

59. Verfahren nach einem der Ansprüche 55 bis 58, wobei der Schritt des Rollens der Zigarette (9) das Bereitstellen eines Rollblocks (12) mit einer Gegenfläche (13) umfaßt, die mit der Rollfläche (2) zusammenwirkt, um einen Spalt (18) dazwischen zu bilden, wobei die Rollfläche die Zigarette durch den Spalt bewegt, und der Spalt eine Länge aufweist, die ausreicht, um die Zigarette um annähernd 180° aus ihrer Position vor dem Eintritt in den Spalt zu rollen.

60. Verfahren nach Anspruch 59, wobei der Rollblock (12) im Schritt des Rollens der Zigarette (9) stationär relativ zu der Rollfläche ist.

## Revendications

1. Dispositif pour inspecter optiquement essentiellement l'ensemble de la surface cylindrique d'un objet opaque sensiblement cylindrique, la partie de surface ayant une longueur axiale qui est nettement supérieure à la circonférence de l'objet et la partie de surface s'étendant circonférentiellement autour d'au moins la moitié de l'objet, la totalité de ladite partie de surface étant inspectée sensiblement instantanément, le dispositif comprenant :
un support (110) pour l'objet de sorte que la partie de surface est exposée pour une inspection optique; et un dispositif (120a) de formation d'images; caractérisé en ce que le dispositif de formation d'images comprend des moyens pour éclairer directement la partie de surface dans deux directions, qui sont séparées circonférentiellement l'une de l'autre par une première distance prédéterminée et qui sont choisies de telle sorte que la lumière provenant desdites deux directions éclaire collectivement l'ensemble de ladite partie de surface, la lumière étant de ce fait réfléchie par lesdites parties de surface dans deux directions;
des moyens pour détecter une lumière réfléchie par ladite partie de surface, comprenant une zone d'image photosensible comportant plus de deux sections photosensibles; et
des moyens pour guider la lumière réfléchie par la partie de surface dans l'une des deux directions en direction d'une première section photosensible et pour guider la lumière réfléchie dans l'autre des deux directions en direction d'une seconde section photosensible, les première et seconde sections de la zone d'image photosensible définissant une partie d'image de la zone d'image photosensible.

2. Dispositif selon la revendication 1, comprenant :
un premier support (110) (1) pour supporter un objet cylindrique (9) de sorte qu'un premier côté de la surface cylindrique de l'objet est exposé pour une inspection optique;
un premier dispositif (120a) (5) de formation d'images pour former une première image dudit premier côté et comprenant : une première source (30a) et une seconde source (30b) d'éclairement pour éclairer ledit premier coté à partir de directions respectives différentes; une première zone photosensible comprenant plus de deux sections photosensibles; et un premier guide (52a) et un second guide (52b) de l'éclairement réfléchi pour guider la lumière réfléchie depuis ledit premier côté dans différentes directions respectivement vers des première et seconde sections photosensibles de la première zone photosensible, ce qui a pour effet que ladite première image est formée sur les première et seconde sections photosensibles;
un second support (130,140,150) pour recevoir un objet (9) à partir du premier support (110) (1) de sorte qu'un second côté de la surface cylindrique de l'objet est exposé pour une inspection optique, le second côté comprenant la totalité de ladite surface non incluse dans le premier côté;
un second dispositif (120b) (14) de formation d'images pour former une seconde image dudit second côté et comprenant :
une troisième source (30a) et une quatrième source (30b) d'éclairement pour éclairer ledit second côté à partir d'une direction respective différente; une seconde zone photosensible comprenant plus de deux sections photosensibles; et un troisième guide (52a) et un quatrième guide (52b) de l'éclairement réfléchi pour guider la lumière réfléchie dans des directions différentes depuis ledit second coté en direction respectivement de première et seconde sections photosensibles de la seconde zone photosensible, ce qui a pour effet que la seconde image est formée dans les première et seconde sections photosensibles.

3. Dispositif selon la revendication 2, dans lequel le premier support d'objet comprend :
un premier tambour (110) possédant une surface sensiblement cylindrique, qui est monté de manière à pouvoir tourner concentriquement autour d'un premier axe, la surface cylindrique du premier tambour étant évidée radialement au moyen d'une première rainure longitudinale (112) parallèle au premier axe, l'objet étant supporté dans la première rainure de sorte que ledit premier côté fait saillie hors de la première rainure.

4. Dispositif selon la revendication 3, dans lequel le premier axe est sensiblement horizontal.

5. Dispositif selon la revendication 3 ou 4, dans lequel le premier dispositif (120a) de formation d'images est disposé par rapport au premier tambour (110) de telle sorte que le premier dispositif (120a) de formation d'images forme la première image alors que l'objet est situé sur le premier tambour, en un emplacement situé au-dessus du premier axe.

6. Dispositif selon l'une quelconque des revendications 2 à 5, dans lequel le second support d'objet (130, 140,150) comprend :
un second tambour (150) possédant une surface sensiblement cylindrique, qui est monté de manière à pouvoir tourner concentriquement autour d'un second axe, la surface cylindrique du second tambour étant évidée radialement par la présence d'une seconde rainure longitudinale parallèle au second axe, l'objet étant supporté dans la seconde rainure de sorte que le second côté fait saillie vers l'extérieur hors de la seconde rainure.

7. Dispositif selon la revendication 6, dans lequel le second axe est sensiblement horizontal.

8. Dispositif selon la revendication 6 ou 7, dans lequel le second dispositif (120b) de formation d'images est disposé par rapport au second tampon de telle sorte que le second dispositif (120b) de formation d'images forme la seconde image tandis que l'objet est situé sur le second tambour en un emplacement situé au-dessus du second axe.

9. Dispositif selon la revendication 6, 7 ou 8, dans lequel le second support (130,140,150) comprend en outre :
un premier tambour intermédiaire rotatif (130) pour recevoir l'objet provenant du premier tambour (110) après que le premier dispositif (120a) de formation d'images a formé la première image, et pour faire passer l'objet en direction du second tambour (150); et
au moins un tambour intermédiaire additionnel (140) pour recevoir l'objet à partir du premier tambour intermédiaire (130) et pour transférer l'objet au second tambour (150).

10. Dispositif selon l'une quelconque des revendications 2 à 9, dans lequel la première fraction prédéterminée est supérieure à la moitié de la circonférence de la surface de l'objet.

11. Dispositif selon la revendication 10, dans lequel la seconde image comprend une seconde fraction prédéterminée de la circonférence de ladite surface, la seconde fraction étant supérieure à la moitié de la circonférence de ladite surface.

12. Dispositif selon la revendication 11, dans lequel lesdites première et seconde images se chevauchent dans deux régions espacées circonférentiellement.

13. Dispositif selon l'une quelconque des revendications précédentes, dans lequel chacune de la première source d'éclairement (30a) et la seconde source d'éclairement (30b) sont des sources d'éclairement linéaires ayant un axe longitudinal sensiblement parallèle à l'axe longitudinal du premier côté de l'objet.

14. Dispositif selon l'une quelconque des revendications 2 à 13, dans lequel la première source d'éclairement (30a) et la seconde source d'éclairement (30b) sont des sources d'éclairement à infrarouge.

15. Dispositif selon l'une quelconque des revendications, dans lequel les deux directions associées au premier guide (52a) et au second guide (52b) de l'éclairement réfléchi s'étendent toutes les deux entre les deux directions associées à la première source d'éclairement (30a) et la seconde source d'éclairement (30b).

16. Dispositif selon l'une quelconque des revendications 2 à 15, dans lequel la première zone photosensible se situe dans une première caméra vidéo (80), le premier dispositif de formation d'images comprend en outre des moyens (62,64,66,68) pour diriger l'éclairement réfléchi guidé à la fois par le premier guide (52a) et le second guide (52b) de l'éclairement réfléchi, vers la surface photosensible de la première caméra vidéo (80).

17. Dispositif selon la revendication 16, dans lequel les premiers moyens de direction (62,64,66,68) dirigent l'éclairement réfléchi guidé par le premier guide (52a) et le second guide (52b) de l'éclairement réfléchi vers des parties respectives différentes de la zone photosensible de la première caméra vidéo (80).

18. Dispositif selon la revendication 16 ou 17, dans lequel les premiers moyens de direction (62,64,66,68) règlent la longueur du trajet optique de l'éclairement réfléchi guidé à la fois par le premier guide (52a) et le second guide (52b) de l'éclairement réfléchi, de manière qu'elle soit sensiblement la même entre la surface de l'objet et la surface photosensible de la première caméra vidéo (80).

19. Dispositif selon la revendication 16, 17 ou 18, dans lequel les premiers moyens de direction (62,64,66, 68) dirigent l'éclairement réfléchi vers une section de la surface photosensible de la première caméra vidéo (80), qui apparaît d'une manière relativement précoce dans la séquence de balayage de la première caméra vidéo (80).

20. Dispositif selon l'une quelconque des revendications 2 à 19, dans lequel une troisième source d'éclairement (30a) et une quatrième source d'éclairement (30b) sont des sources d'éclairement linéaires ayant un axe longitudinal sensiblement parallèle à l'axe longitudinal dudit second côté de l'objet.

21. Dispositif selon l'une quelconque des revendications 2 à 20, dans lequel les troisième et quatrième sources d'éclairement (30a) (30b) sont des sources d'éclairement à infrarouge.

22. Dispositif selon l'une quelconque des revendications 2 à 21, dans lequel les deux directions associées au troisième guide (52a) et au quatrième guide (52b) de l'éclairement réfléchi sont toutes deux situées entre les deux directions associées à la troisième source (30a) et à la quatrième source (30b) des moyens d'éclairement.

23. Dispositif selon l'une quelconque des revendications 2 à 22, dans lequel la seconde zone photosensible se situe dans une seconde caméra vidéo (80) comprenant le second dispositif de formation d'images et comportant en outre : des seconds moyens (62,64,66,68) servant à diriger l'éclairement réfléchi guidé à la fois par le troisième guide (52a) et le quatrième guide (52b) de l'éclairement réfléchi, vers la surface photosensible de la seconde caméra vidéo (80).

24. Dispositif selon la revendication 23, dans lequel les seconds moyens de direction (62,64,66,68) dirigent l'éclairement réfléchi guidé par le premier guide (52a) et le second guide (52b) de l'éclairement réfléchi, vers des parties respectives différentes de la zone photosensible de la seconde caméra vidéo (80).

25. Dispositif selon la revendication 23 ou 24, caractérisé en ce que des seconds directions (62,64,66,68) règlent la longueur du trajet optique de l'éclairement réfléchi guidé à la fois par le premier guide (52a) et le second guide (52b) de l'éclairement réfléchi, de manière qu'elle soit sensiblement la même entre la surface de l'objet et la surface photosensible de la seconde caméra vidéo (80).

26. Dispositif selon la revendication 23, 24 ou 25, dans lequel dans lequel les seconds moyens de direction (62,64,66, 68) dirigent l'éclairement réfléchi, vers une section de la surface photosensible de la seconde caméra vidéo (80), qui apparaît d'une manière relativement précoce dans la séquence de balayage de la seconde caméra vidéo (80).

27. Dispositif selon l'une quelconque des revendications 22 à 26, comprenant en outre :
des moyens (214) pour analyser les première et seconde images pour déterminer si l'objet a un aspect acceptable; et
des moyens (162) pour convoyer l'objet depuis le second support d'objet (150) jusqu'à une destination différente en fonction du fait que lesdits moyens d'analyse (216) détermine ou non le fait que l'objet possède un aspect acceptable.

28. Dispositif selon la revendication 27, dans lequel lesdits moyens d'analyse (214) comprennent :
des moyens pour subdiviser chacune des images en une pluralité de régions, chaque région étant seulement une fraction relativement faible de la dimension de l'image associée perpendiculairement à l'axe longitudinal de l'objet; et
des moyens pour traiter séparément l'information d'image dans chacune des régions de manière à déterminer l'acceptabilité de l'information d'image dans cette région.

29. Dispositif selon la revendication 28, dans lequel l'information d'image associée à chacune desdites régions est représentée par une pluralité de valeurs de pixels, et dans lequel les moyens de traitement comprennent :
des moyens pour comparer chacune desdites valeurs de pixels à une valeur prédéterminée de sorte que l'information d'image dans cette région peut être indiquée comme étant inacceptable si plus d'un nombre prédéterminé desdites valeurs de pixels a une relation prédéterminée par rapport à ladite valeur prédéterminée.

30. Dispositif selon la revendication 29, dans lequel ladite valeur prédéterminée est calculée en tant que moyenne de toutes les valeurs de pixels dans ladite région.

31. Dispositif selon l'une quelconque des revendications 2 à 30, comprenant lesdites première et seconde caméras vidéo (80) des revendications 15 et 22 et comprenant en outre :
des moyens (212) pour déclencher simultanément le balayage des première et seconde caméras vidéo (80); et
des moyens (240) pour multiplexer les signaux de sortie des première et seconde caméras vidéo, le signal vidéo composite de sortie étant le signal de sortie de la première caméra vidéo pendant le balayage de la première partie de la zone photosensible de la première caméra vidéo, et le signal vidéo composite de sortie étant le signal de sortie de la seconde caméra vidéo pendant le balayage de la seconde partie de la zone photosensible de la seconde caméra vidéo.

32. Dispositif selon l'une quelconque des revendications 2 à 31, dans lequel le premier support d'objet (110) et le second support d'objet (150) déplacent l'objet respectivement par rapport au premier dispositif de formation d'images (120a) et au second dispositif de formation d'images (120b), et dans lequel chacun des premier et second dispositifs de formation d'images comprend :
des sources d'éclairement stroboscopique (30a) (30b) pour éclairer momentanément l'objet lorsqu'il se déplace par rapport à chacun du premier dispositif de formation d'images (120a) et du second dispositif de formation d'images (120b) de manière à arrêter effectivement le déplacement de l'objet par rapport aux dispositifs de formation d'images de sorte que les première et seconde images de l'objet sont effectivement des images fixes.

33. Dispositif selon l'une quelconque des revendications 2 à 32, dans lequel l'objet est l'un d'une pluralité d'objets similaires, qui sont traités les uns après les autres en séquence par le premier support d'objet (110) et le second support d'objet (150), dans lequel le premier dispositif de formation d'images (120a) et le second dispositif de formation d'images (120b) sont disposés respectivement par rapport aux premier et second supports d'objet de telle sorte que chaque fois qu'un premier objet est positionné sur le premier support d'objet (110) pour la formation d'une première image du premier objet, un second objet est positionné de façon similaire sur le second support d'objet (150) pour la formation d'une seconde image du second objet.

34. Dispositif selon l'une quelconque des revendications précédentes, dans lequel les moyens de direction de l'éclairement comprennent une première source d'éclairement (34a) et une seconde source d'éclairement (34b), qui sont sensiblement linéaires, chacune d'elles dirigeant une lumière sur ladite partie de surface à partir de l'une respective de directions associées à ladite source, chaque source de lumière étant alignée linéairement avec ladite partie de surface.

35. Dispositif selon l'une quelconque des revendications précédentes, dans lequel les moyens de guidage comprennent une première ouverture linéaire (52a) et une seconde ouverture linéaire (52b), dont chacune transmet une lumière réfléchie par ladite partie de surface dans l'une respective desdites deux directions associées aux moyens de réception, chaque ouverture étant alignée linéairement avec ladite partie de surface.

36. Dispositif selon l'une quelconque des revendications précédentes, comprenant en outre :
des moyens (80) pour détecter la lumière reçue par les moyens de réception (52a,b) pour produire un signal indicatif de la lumière.

37. Dispositif selon la revendication 36, dans lequel les moyens de détection comprennent une caméra vidéo (80).

38. Dispositif selon la revendication 37, dans lequel les moyens de guidage comprennent une première ouverture linéaire (52a) et une seconde ouverture linéaire (52b), au moyen desquelles la lumière réfléchie par ladite partie de surface dans l'une respective desdites directions est transmise à la caméra vidéo (80).

39. Dispositif selon la revendication 38, dans lequel la caméra vidéo (80) possède une surface de réception d'images, et dans lequel lesdits moyens de direction (62,64,66,68) dirigent la lumière traversant chacune d'ouvertures (52a,b) en direction d'une partie respective différente de la surface de réception d'images.

40. Dispositif selon la revendication 39, dans lequel lesdits moyens de guidage comprennent :
un premier miroir (62) et un second miroir (66) servant à réfléchir respectivement la lumière traversant la première ouverture (52a) et la seconde ouverture (52b) dans des directions différentes vers un axe commun; et
un troisième miroir (66) et un quatrième miroir (68) situés sur des côtés opposés respectifs dudit axe commun pour réfléchir respectivement la lumière depuis le premier miroir (62) et le second miroir (64) en direction de la surface de réception d'images.

41. Dispositif selon la revendication 40, dans lequel lesdits moyens de guidage comprennent au moins un prisme servant à recevoir une lumière traversant l'une des ouvertures (52a,b) et à rediriger cette lumière vers la surface de réception de l'image.

42. Dispositif selon la revendication 41, dans lequel le prisme comporte deux parties opérationnelles, dont chacune redirige une lumière traversant l'une respective des ouvertures (52a,b) vers la surface de réception de l'image.

43. Dispositif selon la revendication 42, dans lequel les deux parties opérationnelles font converger la lumière traversant les ouvertures (52a,b).

44. Dispositif selon la revendication 43, dans lequel les deux parties opérationnelles provoquent la convergence au moyen de la réfraction de la lumière traversant les deux parties opérationnelles.

45. Dispositif selon la revendication 43, dans lequel les deux parties opérationnelles provoquent la convergence par réflexion interne de la lumière traversant les parties opérationnelles.

46. Dispositif selon la revendication 45, dans lequel chacune des parties opérationnelles comprend :
une première surface pour réfléchir de façon interne la lumière depuis l'une respective des ouvertures (52a,b) en direction de la lumière réfléchie par la première surface de l'autre des parties fonctionnelles; et une seconde surface pour réfléchir de façon interne la lumière réfléchie par la première surface de la partie opérationnelle en direction de la surface de réception de l'image.

47. Dispositif selon l'une quelconque des revendications précédentes, dans lequel chacune des sources d'éclairement (34a,b) comprend un réseau linéaire des extrémités d'une pluralité de fibres optiques (33).

48. Dispositif selon l'une quelconque des revendications précédentes, dans lequel chacune des sources d'éclairement (34a,b) comprend une pluralité de diodes photoémissives (40) disposées selon un réseau linéaire.

49. Dispositif selon la revendication 2, dans lequel le premier support est un tambour de roulement (1) comportant une surface de roulement mobile (2) pourvue d'une pluralité de rainures successives (4) séparées les unes des autres par des distances identiques et s'étendant perpendiculairement à la direction de déplacement de la surface de roulement (2), le dispositif comprenant un système d'entraînement pour le tambour de roulement;
dans lequel les moyens d'exposition d'un second côté de ladite surface comprennent un bloc de roulement (12) possédant une surface antagoniste (13) définissant, avec la surface de roulement (2), un interstice (18), dans lequel une cigarette (9) avance, la largeur de l'interstice (18) étant inférieure au diamètre d'une cigarette de sorte que les surfaces (2) (13) font rouler la cigarette pendant son déplacement à travers l'interstice;
dans lequel le premier dispositif de formation d'images comprend une première caméra (5) agencée de manière à observer la cigarette avant qu'elle pénètre dans l'interstice (18); et
dans lequel le second dispositif de formation d'images comprend une seconde caméra (14) disposée de manière à observer la cigarette (9) après qu'elle sort de l'interstice (18), chacune des première et seconde caméras produisant un premier signal, le dispositif comprenant en outre un système d'observation couplé à la première caméra (5) et à la seconde caméra (14), le système d'observation recevant les premiers signaux à partir des caméras, de manière à comparer les premiers signaux à un ensemble prédéterminé de caractéristiques et à produire un second signal sur la base de la comparaison; et
une unité de délivrance/de rejet comportant un tambour de délivrance/de rejet (16) pour recevoir une cigarette (9) à partir de la surface de roulement (2), ladite unité étant couplée de manière à recevoir le second signal provenant du système d'observation pour rejeter des cigarettes qui ne satisfont pas à l'ensemble prédéterminé de caractéristiques.

50. Dispositif selon la revendication 49, dans lequel la longueur de l'arc de l'interstice (18) est suffisante pour faire rouler la cigarette (9) sur environ 180° à partir de la position qu'elle avait avant de pénétrer dans l'interstice.

51. Dispositif selon la revendication 49 ou 50, comprenant en outre une première source de lumière (20) proche de la première caméra (5).

52. Dispositif selon l'une quelconque des revendications 49, 50 ou 51, comprenant en outre une seconde source de lumière (21) proche de la seconde caméra (14).

53. Dispositif selon l'une quelconque des revendications 49 à 52, comportant en outre une troisième caméra (22) et une quatrième caméra (23), la troisième caméra étant agencée de manière à voir la cigarette (9) au même emplacement sur la surface de roulement (2) que la première caméra, et étant connectée au système d'observation, et la quatrième caméra étant agencée de manière à voir la cigarette au même emplacement sur la surface de roulement que la seconde caméra (14) et étant connectée au système d'observation.

54. Procédé pour inspecter optiquement essentiellement l'ensemble de la surface cylindrique d'un objet cylindrique (9), consistant à :
supporter l'objet sur une première surface de support (110) (1);
inspecter une première partie de la surface cylindrique de l'objet pour produire une première image par éclairement de ladite première partie à partir de deux directions différentes et guidage de la lumière réfléchie vers deux sections photosensibles différentes d'une première zone photosensible;
faire tourner l'objet sur 180° ;
supporter l'objet sur une seconde surface de support (110) (1);
inspecter une seconde partie de la surface cylindrique de l'objet, les première et seconde parties incluant conjointement l'ensemble de la surface cylindrique de l'objet, pour fournir une seconde image par éclairement de ladite seconde partie à partir de deux directions différentes et guidage de la lumière réfléchie vers deux sections photosensibles différentes d'une seconde zone photosensible;
analyser chaque image pour déterminer si elles satisfont ou non à un critère prédéterminé; et
rejeter l'objet si le critère prédéterminé n'est pas satisfait.

55. Procédé selon la revendication 54 pour inspecter des cigarettes, consistant à disposer une cigarette (9) sur une surface de roulement (2), observer la cigarette une première fois avec une première caméra (5), faire rouler la cigarette sur environ 180° à l'aide d'un bloc de roulement (12), observer la cigarette une seconde fois, envoyer un premier signal en tant que résultat des première et seconde observations à un système d'observation, comparer le premier signal à un ensemble prédéterminé de caractéristiques, transférer la cigarette à une unité de délivrance/de rejet (16), envoyer un second signal sur la base de la comparaison à partir du système d'observation à l'unité de délivrance/de rejet et rejeter les cigarettes qui ne satisfont pas à l'ensemble prédéterminé de caractéristiques.

56. Procédé selon la revendication 55, selon lequel lors de l'étape d'observation, la cigarette (9) est observée une seconde fois avec une seconde caméra (14).

57. Procédé selon la revendication 54 ou 55, selon lequel l'étape consistant à observer une première fois la cigarette (9) comprend une observation sur presque 180° de la circonférence de la cigarette.

58. Procédé selon l'une quelconque des revendications 55, 56 ou 57, selon lequel l'étape consistant à observer une seconde fois la cigarette (9) comprend l'observation de presque 180° de la circonférence de la cigarette.

59. Procédé selon l'une quelconque des revendications 55 à 58, selon lequel l'étape consistant à faire rouler la cigarette (9) consiste à prévoir un bloc de roulement (12) pourvu d'une surface antagoniste (13) coopérant avec la surface de roulement (2) pour définir avec cette dernière un interstice (18), la surface de roulement déplaçant la cigarette à travers l'interstice, et l'interstice possédant une longueur suffisante pour faire rouler la cigarette sur environ 180° à partir de la position qu'elle avait avant de pénétrer dans l'interstice.

60. Procédé selon la revendication 59, selon lequel le bloc de roulement (12) lors de l'étape consistant à faire rouler la cigarette (9) est fixe par rapport à la surface de roulement.
